# EUROPEAN PATENT APPLICATION

(11) **EP 2 224 158 A1**
(43) Date of publication of application: **01.09.2010**
(21) Application number: 08862426.7
(22) Date of filing: 18.12.2008
(51) Int. Cl.: F16L 37/12

(54) **COUPLING COMPLETION CONFIRMATION MECHANISM**

(30) Priority: 19.12.2007 JP 2007327084; 31.07.2008 JP 2008198590; 26.09.2008 JP 2008247442
(71) Applicant: NIFCO INC., Kanagawa-ken 244-8522 (JP)
(72) Inventor: NAKAMURA, Takaaki, Yokohama-shi Kanagawa 244-8522 (JP)
(74) Representative: Gassner, Wolfgang
(86) International application number: PCT/JP2008/003836
(87) International publication number: WO 2009/078179

(57) **Abstract**

[Object] When two components are connected, a connection confirming mechanism is provided, which can carry out a display of a completion of connection state with an easily viewable size and prevent a false display of the completion of connection state.

[Means of Solving Problem] A connection confirming mechanism, including a lock component 10 maintaining a completion of connection state of two components and a means, which can visually confirm the above-mentioned completion of connection state, has a structure comprising a pipe 2 including a projection and a connector 1 connected with a pipe. The connector is provided in a state wherein a connecting display component 8 is urged to one side relative to a housing 6, and when the pipe is completed to be fastened and connected with the connector, an urging force is released and the connecting display component moves, so that a visual connecting confirmation can be possible from the connector.

## Description

### Field of Technology

This invention relates to a connection confirming mechanism for enabling to visually confirm the completion of the connection thereof when two components are connected.

### Background Art

As for a conventional technology with respect to this kind of connection confirming mechanism, for example, in the connection confirming mechanism, which is used for connecting between a pipe and a connector main body, the following structure is well-known. A removal preventing projection, which engages with the collar of the pipe, is provided in a retainer for retaining the pipe relative to the connector main body, and in the process, wherein the collar of the pipe passes through the inside of the retainer at the time of the connection, the removal preventing projection is pushed out, and the retainer expands, so that a checker disposed on a front face side of the retainer is pushed by the collar, and is exposed to the outside (for example, see Patent Document 1).
Patent Document 1: Japanese Unexamined Patent Publication No. 2002-243082

### Disclosure of the Invention

### Problems to be Solved by the Invention

However, since the conventional connection confirming mechanism described in the above-mentioned Patent Document 1 has a structure in which the checker pushed by the collar of the pipe is exposed to the outside, an exposed area thereof is influenced by a thickness of the collar of the pipe, and in the case that the collar is made relatively thinly and the like, the exposed area of the checker becomes smaller, which made it difficult to be visually confirmed. Therefore, in order to ensure the exposed area of the checker, there was a case that a shape of the pipe (collar) was restricted.

Also, in the above-mentioned conventional connection confirming mechanism, if the retainer is pressed in an expanding direction by the end of the pipe by such that a user mistakenly inserts the plumbing obliquely relative to the connector main body and the like, even though both sides are in an incomplete connected state, there was a possibility that the checker indicating a connecting completion state was pushed out and exposed to the outside.

Additionally, in the above-mentioned connection confirming mechanism, it is preferred that the release of a connected state is achieved by a simple operation without complicating the structure thereof.

The present invention is devised in order to solve the problems of such conventional technology, and the first purpose is to provide a connection confirming mechanism, which can carry out a display of the completion of connection state with a size which is easily viewable, and also, which prevents a false display of the completion of connection state. Also, the second purpose of the present invention is to provide the connection confirming mechanism, which releases the connected state by a simple operation without complicating the structure.

### Means for Solving the Problems

A first invention, which was made for solving the above-mentioned problems, is a connection confirming mechanism which enables to visually confirm a connecting completion between a first component (2) and a second component (1) in which the first component is inserted. The above-mentioned second component comprises a connecting display component (8) moving between an initial position, which is not exposed to the outside, and a connecting display position, in which at least one portion thereof is exposed to the outside; urging means (22, 122) urging the above-mentioned connecting display component to the above-mentioned connecting display position side; and a locking mechanism locking the above-mentioned connecting display component in the above-mentioned initial position against an urging force of the above-mentioned urging means. The above-mentioned locking mechanism has a structure releasing the above-mentioned locked state at the time of the above-mentioned completion of connection.

A second invention, which was made for solving the above-mentioned problems, is the connection confirming mechanism which enables to visually confirm the connecting completion between the first component (2) and the second component (1) in which the first component is inserted. The above-mentioned second component comprises a shield component (408) moving between the initial position which shields the connecting display portion and the connecting display position which allows the connecting display portion to be exposed; the urging means (22, 122) which urges the above-mentioned shield component to the above-mentioned connecting display position side; and the locking mechanism locking the above-mentioned shield component in the above-mentioned initial position against the urging force of the above-mentioned urging means. The above-mentioned locking mechanism has a structure releasing the above-mentioned locked state at the time of the above-mentioned completion of connection.

As a third invention, which was made for solving the above-mentioned problems, the above-mentioned locking mechanism can have a structure comprising an engaging portion (43) provided in the above-mentioned connecting display component or the above-mentioned shield component, and an engaged portion (24) provided in a housing of the above-mentioned second component and engaging the above-mentioned engaging portion.

As a fourth invention, which was made for solving the above-mentioned problems, the above-mentioned second component can have a structure further comprising a release means (9) releasing a locked state of the above-mentioned connecting display component or the above-mentioned shield component in response to the insertion of the above-mentioned first component.

As a fifth invention, which was made for solving the above-mentioned problems, the above-mentioned release means can have a structure comprising a component which releases the locked state of the above-mentioned connecting display component or the above-mentioned shield component by deforming or moving due to an engagement with the above-mentioned first component.

As a sixth invention, which was made for solving the above-mentioned problems, a slide component, which moves in response to the insertion of the above-mentioned first component, is included, and the above-mentioned release means can have a structure comprising locking release portions (51), which are provided in the above-mentioned slide component, and engage the above-mentioned connecting display component or the above-mentioned shield component due to the above-mentioned movement to release the above-mentioned locked state.

As a seventh invention, which was made for solving the above-mentioned problems, the above-mentioned locking mechanism can have a structure integrally provided with the above-mentioned engaging portion and also including receiving portions (44) engaging the locking release portions of the above-mentioned slide component.

As an eighth invention, which was made for solving the above-mentioned problems, the above-mentioned second component further includes a lock component (101) maintaining a connected state with the above-mentioned first component, and the above-mentioned release means can have a structure of release pieces (105) provided in the above-mentioned lock component.

As a ninth invention, which was made for solving the above-mentioned problems, the above-mentioned lock mechanism can have a structure provided to be freely movable in a vertical direction relative to an insertion direction of the above-mentioned first component, including a lock component (10), which can maintain the connected state with the above-mentioned first component, and carrying out the locking of the above-mentioned connecting display component or the above-mentioned shield component by the movement of the lock component, or the release thereof.

As a tenth invention, which was made for solving the above-mentioned problems, the above-mentioned locking mechanism can have a structure including a slide component (9) moving in the insertion direction of the first component due to the engagement with the above-mentioned first component and carrying out the control of the movement of the above-mentioned lock component by the movement of the slide component, or the release thereof.

As an eleventh invention, which was made for solving the above-mentioned problems, a cam surface (180) is provided in at least one of either the above-mentioned lock component or the above-mentioned connecting display component, or at least one of either the above-mentioned lock component or the above-mentioned shield component, and engages the other of those, and the above-mentioned lock component can have a structure moving in the above-mentioned vertical direction due to the above-mentioned cam surface.

As a twelfth invention, which was made for solving the above-mentioned problems, the above-mentioned connecting display component or the above-mentioned shield component can have a structure being locked in the above-mentioned lock component through the above-mentioned cam surface.

As a thirteenth invention, which was made for solving the above-mentioned problems, the above-mentioned locking mechanism further comprises a control component (191) controlling the movement of the above-mentioned slide component. The above-mentioned control component can have a structure including elastic deformation portions (191b) engaging a housing (6) of the above-mentioned second component or the above-mentioned lock component, and only in the case that the above-mentioned first component is inserted into the above-mentioned second component in a regular direction, moving on a housing side of the above-mentioned second component due to a deformation of the above-mentioned elastic deformation portions, and releasing the control of the above-mentioned slide component.

As a fourteenth invention, which was made for solving the above-mentioned problems, the above-mentioned slide component can have a structure including an engaging portion (163), which engages a corresponding engaging portion (181) formed in the above-mentioned lock component and controls the movement of the lock component, and only in the case that the above-mentioned first component is inserted into the above-mentioned second component in the regular direction, moving in the above-mentioned insertion direction, and releasing an engagement between the above-mentioned engaging portion and the above-mentioned corresponding engaging portion. In this case, a mutual engaging relationship (for example, a convexity and a concavity) between the engaging portion and the corresponding engaging portion can be an inverted relationship.

As a fifteenth invention, which was made for solving the above-mentioned problems, the above-mentioned urging means (122) can have a structure connected to the above-mentioned connecting display component or the above-mentioned shield component and the above-mentioned slide component.

A sixteenth invention, which was made for solving the above-mentioned problems, is the connection confirming mechanism between the first component (2) and the second component (1) in which this first component is inserted. The above-mentioned second component comprises the lock component (10), which moves between a locked position engaging the above-mentioned first component and maintaining the connected state, and a lock release position releasing the engagement thereof; the control component moving between a movement control position halting the movement from the above-mentioned locked position of the above-mentioned lock component and a movement allowable position allowing the movement of the above-mentioned lock component from the above-mentioned locked position; the urging means (22, 122) urging the above-mentioned control component to the above-mentioned movement control position side; and the locking mechanism locking the above-mentioned control component in the above-mentioned movement allowable position against an urging force of the above-mentioned urging means. The above-mentioned lock component moves from the above-mentioned lock release position to the above-mentioned locked position when the above-mentioned first component is inserted, and the above-mentioned locking mechanism has a structure releasing the above-mentioned locked state at the time of the completion of connection between the above-mentioned first component and the above-mentioned second component.

As a seventeenth invention, which was made for solving the above-mentioned problems, the above-mentioned control component is the connecting display component (8) provided for the display of the completion of connection between the above-mentioned first component and the above-mentioned second component, and can have a structure exposing at least one portion thereof to the outside in the above-mentioned movement control position while not exposing to the outside in the above-mentioned movement allowable position.

As a eighteenth invention, which was made for solving the above-mentioned problems, the above-mentioned control component is the shield component (408) provided for the display of the completion of connection between the above-mentioned first component and the above-mentioned second component, and can have a structure exposing the connecting display portion in the above-mentioned movement control position while shielding the connecting display portion in the above-mentioned movement allowable position.

As a nineteenth invention, which was made for solving the above-mentioned problems, the above-mentioned second component can have a structure allowing the above-mentioned control component to move from the above-mentioned movement control position to the above-mentioned movement allowable position when the above-mentioned connecting with the above-mentioned first component is released, and also allowing the above-mentioned lock component to move from the above-mentioned locked position to the above-mentioned lock release position.

As a twentieth invention, which was made for solving the above-mentioned problems, the above-mentioned second component can have a structure further comprising an operation component (304) receiving an operation force for moving the above-mentioned control component against the above-mentioned urging force.

As a twenty-first, invention which was made for solving the above-mentioned problems, the above-mentioned lock component can have a structure exposing at least one portion thereof from an external surface of the above-mentioned second component.

### Effect of the Invention

According to the above-mentioned first and second inventions, since there is the structure releasing the locking of the connecting display component and moving to the connecting display position at the time of the completion of connection, the display of the connecting completion state can be carried out with a size which is easily viewable, and also, can prevent a false display of the completion of connection state due to direct contact between the first component and the connecting display component (or the shield component). Also, according to the above-mentioned third invention, due to a simplified structure, the connecting display component (or the shield component) can be locked in a state urged to the connecting display position side. Also, according to the above-mentioned fourth invention, without directly contacting the first component with the connecting display component (or the shield component), the locked state can be released at the appropriate timing. Also, according to the above-mentioned fifth invention, the release means can be realized by the simplified structure. Also, according to the above-mentioned sixth invention, by the simplified structure, in response to the insertion of the first component, the release of the locking of the connecting display component (or the shield component) can be carried out. Also, according to the above-mentioned seventh invention, due to an engagement between the locking release portions and the receiving portions, the locking of the engaging portion can be released, and without complicating the locking mechanism, the locking of the connecting display component (or the shield component) or the release thereof can be realized. Also, according to the above-mentioned eighth invention, the structure can be simplified and a manufacturing cost can be reduced. Also, according to the above-mentioned ninth invention, while controlling the increase of the length (the insertion direction of the first component) of the second component, the connected state between the first component and the second component can be maintained. Also, according to the above-mentioned tenth invention, the control of the movement of the lock component or the release thereof can be easily carried out depending on the engagement with the first component. Also, according to the above-mentioned eleventh invention, the movement in a vertical direction of the lock component can be realized by the simplified structure. Also, according to the above-mentioned twelfth invention, the locking of the connecting display component (or the shield component) and the movement in the vertical direction of the lock component can be realized by the simplified structure. Also, according to the thirteenth invention, in the case that the first component is inserted in a false direction, the movement of the slide component can be controlled and a false operation of the connection confirming mechanism can be prevented. Also, according to the above-mentioned fourteenth invention, the false operation of the connection confirming mechanism can be prevented by the simplified structure with a few parts. Also, according to the above-mentioned fifteenth invention, the connecting display component and the slide component can be urged in a predetermined direction by the simplified structure. Also, according to the above-mentioned sixteenth invention, by halting the release of the lock component at the time of the completion of connection, the connected state thereof can be stably maintained. Also, after the completion of connection, a substantive connecting confirmation can be possible by failing the release of the connecting without a specific operation (an operation moving to a control component movement allowable position and an operation moving the lock component to the lock release position). Also, according to the above-mentioned seventeenth and eighteenth inventions, the display of the completion of connection state can be carried out with an easily viewable size, and can prevent the false display of the completion of connection state due to the direct contact between the first component and the connecting display component (or the shield component). Also, according to the above-mentioned nineteenth invention, by a simplified operation, the connection between the first component and the second component can be released. Also, according to the above-mentioned twentieth invention, by operating the operation component, the operation moving the control component from the movement control position to the movement allowable position becomes easier. Also, according to the above-mentioned twenty-first invention, by operating an exposed portion of the lock component, the operation moving the lock component from the locked position to the lock release position becomes easier.

### Best Modes of Carrying out the Invention

Hereinafter, embodiments of the present invention will be explained with reference to figures.

### <First embodiment>

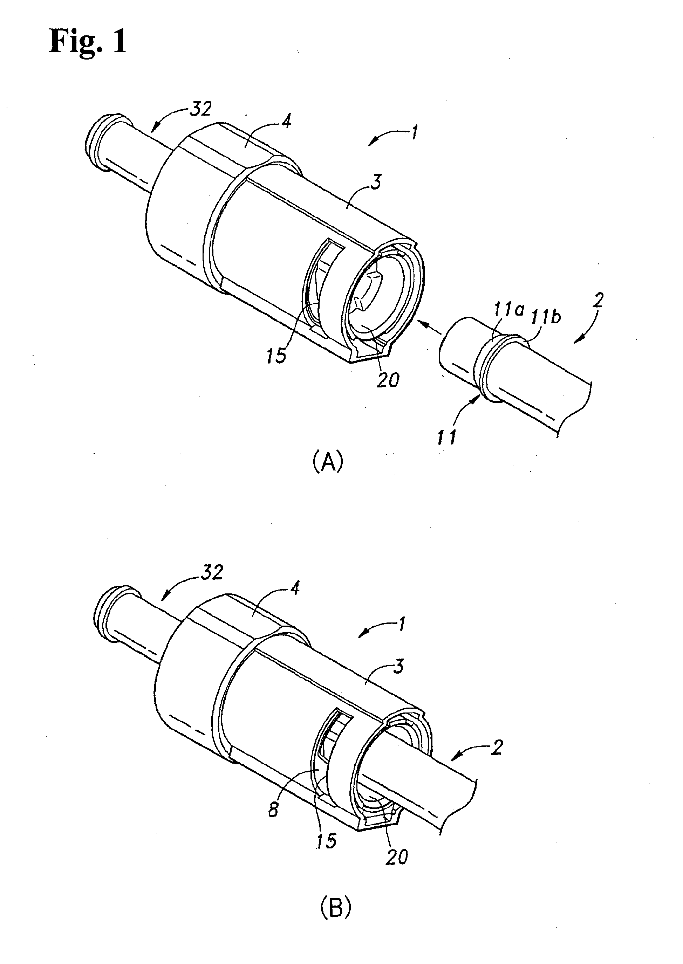

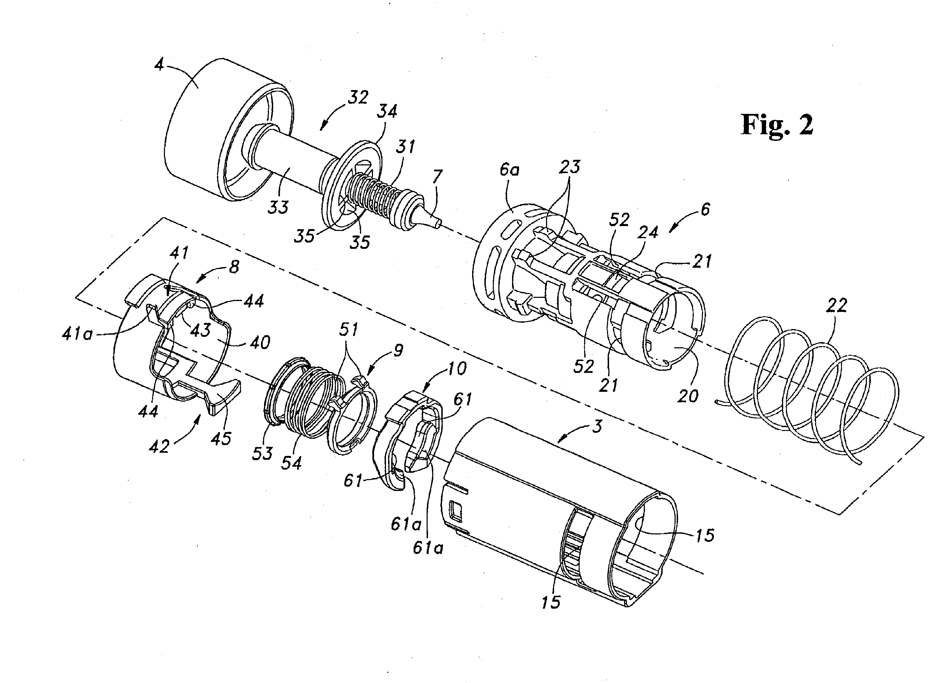

Figs. 1(A), 1(B) are perspective views of a connector comprising a connection confirming mechanism according to a first embodiment of the present invention, and Fig. 2 is an exploded perspective view of essential parts of the connector thereof. Hereinafter, unless there is no special written notice, a directional term "front (forward)" indicates an insertion direction (arrow direction) along an axis of a pipe 2 relative to a connector 1 in Fig. 1(A), and a term "back (backward)" indicates an opposite direction thereof.

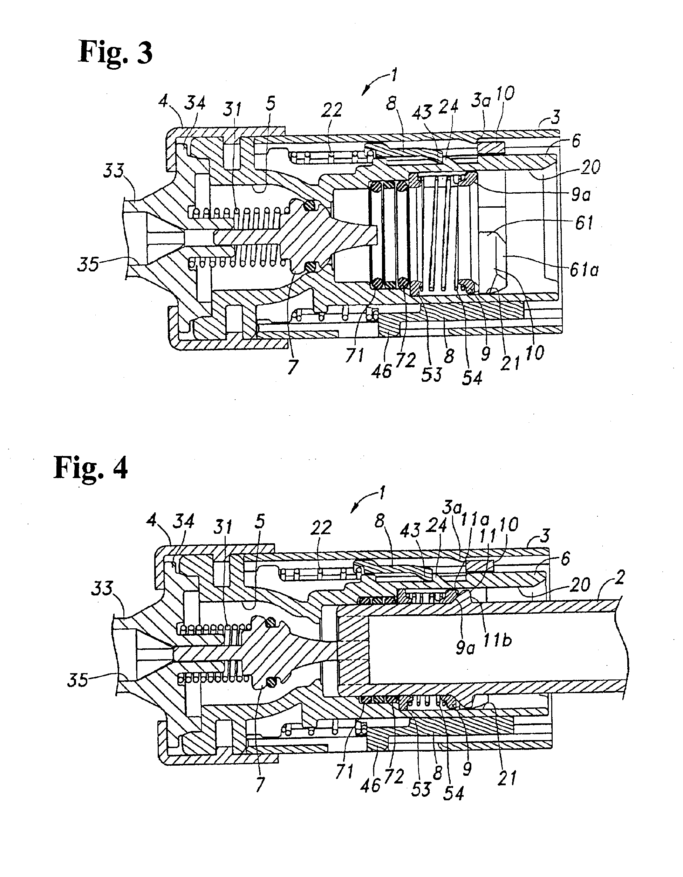

The connector 1 is connected with the pipe 2 which transports a fluid body, and an outer shell thereof is structured by a main body cover 3 and an end cover 4. Inside the connector 1, a housing 6 wherein a flow channel 5 (see Fig. 3) is provided; a valve 7 opening and closing the flow channel 5 thereof; a connecting display component 8 displaying a completion of connection state between the connector 1 and the pipe 2 so that a user can visually confirm; a slide component 9 which is slidable in a front and back direction inside the housing 6; and a lock component 10 maintaining a connected state between the connector 1 and the pipe 2 by clamping and fixing the pipe 2 which was inserted into the connector 1, are housed.

The pipe 2 is made from metal, synthetic resin, or the like, and a collar 11 which is used for connecting with the connector 1 is provided in an end side thereof. The collar 11 includes an inclined surface 11a inclined to a backward side from an outer circumferential surface so that the pipe 2 can be easily inserted and fixed relative to the connector 1, and a rear surface 11b which is approximately vertical to an axis.

The main body cover 3 is made from a synthetic resin component with an approximately cylindrical shape, and one end thereof is connected to the metallic end cover 4 with a slightly large diameter. Also, in the main body cover 3, a display window 15 comprising a pair of openings, which expand in a circumferential direction, is provided. As shown in Fig. 1(A), in an unconnected state (hereinafter, merely referred to as the "unconnected state") between the connector 1 and the pipe 2, the connecting display component 8 is not exposed from the display window 15 (hereinafter, referred to as a "connecting confirmation nondisplay state"). On the other hand, as shown in Fig. 1(B), in a state wherein the connecting between the connector 1 and the pipe 2 are completed, the connecting display component 8 is exposed from the display window 15 (hereinafter, referred to as a "connecting confirmation display state"). By exposing the connecting display component from this display window 15, the user can visually confirm the completion of connection state between the connector 1 and the pipe 2. The display window 15 can provide the exposed connecting display component 8 with an easily viewable size for the user.

The housing 6 is made from the synthetic resin component with the approximately cylindrical shape, and at an assembling time of the connector 1, the housing 6 is fixed in a state inserted into the main body cover 3. The housing 6 includes an insertion hole 20 of the pipe 2 connected to the inner flow channel 5, and also, in a position approximately corresponding to the display window 15 of the main body cover 3, a pair of openings 21, in which the lock component 10 is fitted, is provided. As for a spring 22 wound in an outer circumference of the housing 6, while one end side thereof is locked in a spring locking portion 23 of the outer circumferential surface of the housing 6, the other end side thereof is locked in a front end portion of the connecting display component 8 which is slidably placed on the outer circumferential surface of the housing 6 in the front and back direction. Due to this spring 22, the connecting display component 8 is urged backward. Also, a convex piece 24 for locking the connecting display component 8 in a predetermined position (an initial position which becomes the connecting confirmation nondisplay state) against an urging force of the spring 22 is provided on the outer circumferential surface of the housing 6.

The valve 7 is attached to a joint component 32 in a state wherein a spring 31 is installed in between, and while blocking the flow channel 5 inside the housing 6 due to an urging force of the spring 31, the valve 7 can open the flow channel 5 by moving forward against the urging force of the spring 31. The joint component 32 includes a tube portion 33 and a flange portion 34 attached to an expanded radius portion 6a of the front side of the housing 6. A flow channel 35, which is provided inside the flange portion 34, communicates with the flow channel 5 inside the housing 6. The tube portion 33 is connected to other devices, a pipe, or the like. Incidentally, the flange portion 34 of the joint component 32 is fixed to the expanded radius portion 6a of the housing 6 by the end cover 4 (see Fig. 3); however, by welding the joint component 32 relative to the housing 6, the end cover 4 can also be omitted.

The connecting display component 8 is made from the synthetic resin component with an approximately cylindrical shape providing a half circular portion 40 extending to a backward side as a portion (see Fig. 1(B)) exposed from the display window 15 of the main body cover 3. The connecting display component 8 includes a locked portion 41, which is locked in the housing 6, and a connecting release portion 42 for releasing the connection between the connector 1 and the pipe 2. In the entire connecting display component 8 or in at least a portion (half circular portion 40) exposed from the display window 15, a color with a high level of visibility (for example, red) is provided.

The locked portion 41 is formed so as to cut out a back portion side of the connecting display component 8. The width of a connecting portion 41a, which is positioned on the front side and connected to the connecting display component 8 main body, is moderately reduced, so that the locked portion 41 is provided such that a back end side can easily carry out an elastic deformation in a radial direction as a fixed end of the connecting portion 41a thereof. In the center of a circumferential direction of the back end side of the locked portion 41, a back locking claw 43, which is locked in the convex piece 24 of the housing 6 against the urging force of the spring 22, projects toward the inside. Also, on both sides of the back locking claw 43, a pair of engaging pieces 44, which engages the slide component 9 at the time of releasing a locked state of the back locking claw 43, projects toward the inside. The projecting height of the pair of engaging pieces 44 is set larger than that of the back locking claw 43.

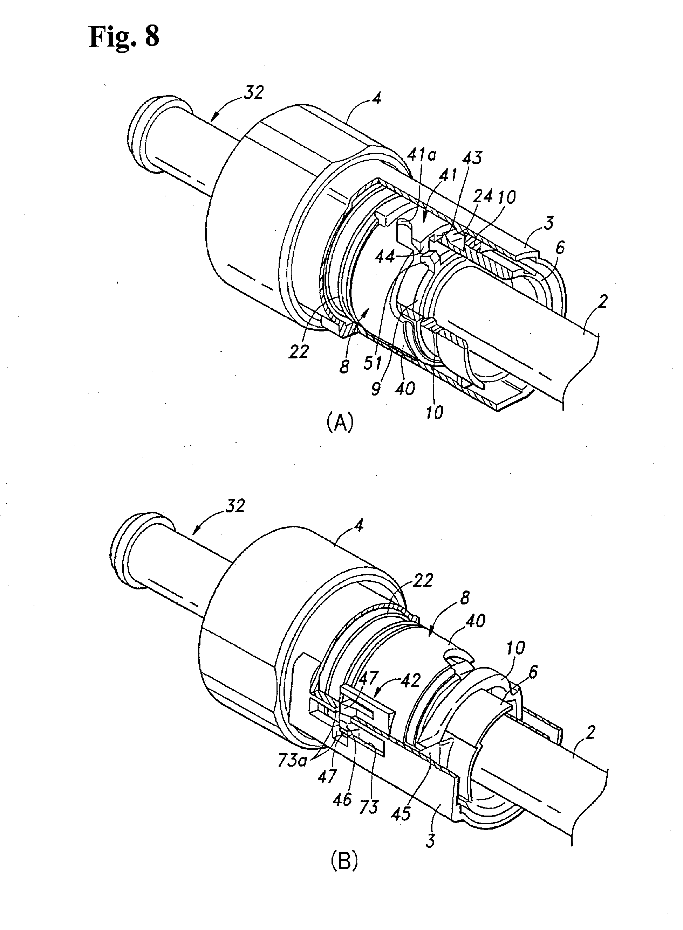

The connecting release portion 42 includes a triangular piece 45 whose cross section which extends to the backward side from the half circular portion 40 comprises an approximately triangle shape. Although it is not shown in the figures, on the front side thereof, the connecting release portion 42 includes an operation claw 46 for being operated by the user when the connection between the connector 1 and the pipe 2 is released, and front locking claws 47 which are provided on both sides of the operation claw 46 thereof and locked in the main body cover 3 so as to control the forward movement of the connecting display component 8 (see Fig. 8(B)).

The slide component 9 is made from the synthetic resin component with an approximately circular shape, and includes a pair of projecting pieces 51 provided so as to project to the outside from an outer circumferential margin by corresponding to positions of the engaging pieces 44 of the connecting display component 8. As mentioned hereinafter, the projecting pieces 51 project outwardly from a pair of slits 52 extending in the front and back direction which are provided in the housing 6 after the assembly of the connector 1, so that the projecting pieces 51 become able to engage the engaging pieces 44 of the connecting display component 8, and guide a sliding operation in the front and back direction of the slide component 9 in accordance with the slits 52. The slide component 9 is connected to a push 53 which is attached to the inside of the insertion hole 20 of the housing, and urged to the backward side by a spring 54 which is installed between both sides.

The lock component 10 is made from the synthetic resin component with an approximately C-shape in cross section, and on both end portions which can be expanded due to the elastic deformation, fixing portions 61 are provided so as to protrude into the inside of the radial direction. The fixing portions 61 include inclined surfaces 61a which are fitted in the inclined surface 11a of the collar 11 on the back side, and when the connector 1 and the pipe 2 are connected, the fixing portions 61 are pushed open by the collar 11 which moves forward, and the radius of the inner circumference of the fixing portions 61 is expanded, so that the collar 11 can pass through. After the collar 11 is passed through, the fixing portions 61 reduce the radius due to an elastic restoring force and clamp the outer circumferential surface of the pipe 2. Also, the fixing portions 61 control a backward movement of the pipe 2 by abutting against the rear surface 11b of the collar 11.

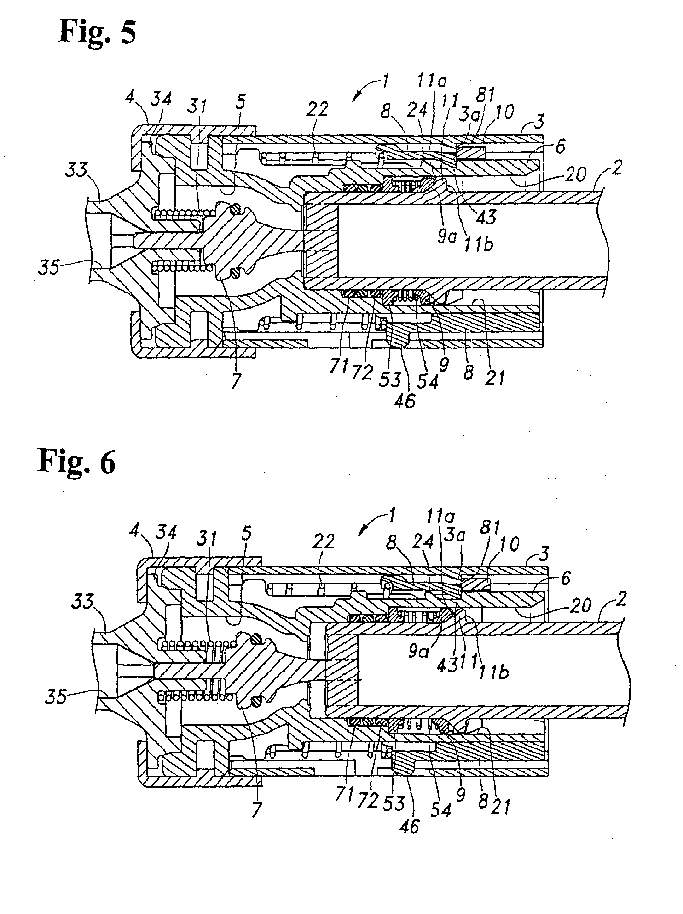

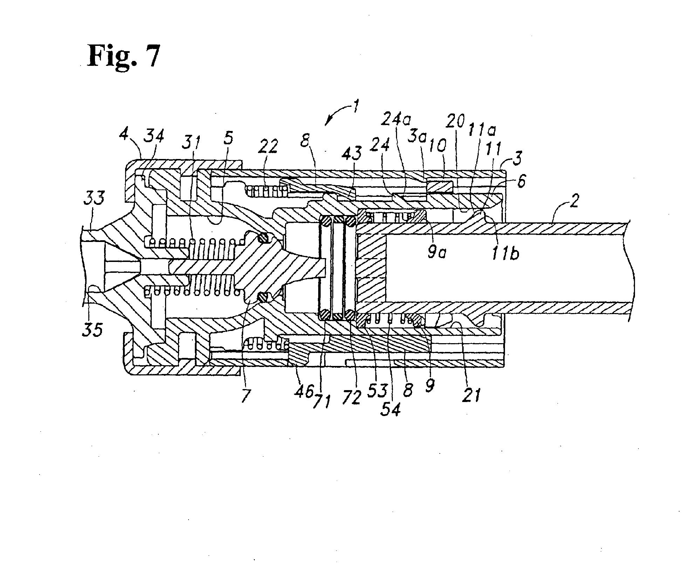

Next, details of a connecting operation between the connector and the pipe with the above-mentioned structure will be explained. Figs. 3 to 7 are cross sectional views showing a series of operation states of the connector according to the first embodiment. Here, Fig. 3 shows the connector in the unconnected state, Fig. 4 shows the connector in the connected state (however, the connecting confirmation nondisplay state) with the pipe, Figs. 5, 6 show the connector on the way of the transition from the state in Fig. 4 to the connecting confirmation display state, and after the transition, respectively, and Fig. 7 shows the connector which is in a connecting release state.

As shown in Fig. 3, as for the connector 1 which is in the unconnected state, in a state being urged backward by the spring 22, the back locking claw 43 is locked in the convex piece 24 of the housing 6, so that the connecting display component 8 is retained in the initial position. Also, the slide component 9 is urged backward by the spring 54, and is in a state abutting against the lock component 10. Also, the lock component 10 is fitted into the openings 21 of the housing 6, and an upper portion thereof is locked in a locking projection 3a provided on an inner circumferential surface of the main body cover 3, and is in a state wherein the forward movement is controlled.

Next, as shown in Fig. 4, if the pipe 2 is inserted into the insertion hole 20 of the connector 1 up to a regular connecting position, the collar 11 of the pipe 2 allows the lock component 10 to expand once by the inclined surface 11a thereof, moves to the front side thereof, and is clamped between the slide component 9 and the lock component 10 due to an urging force of the spring 54. At this time, the end of the pipe 2 abuts against the valve 7 and pushes the valve 7 forward against the urging force of the spring 31, so that the flow channel 5 is opened. O-rings 71, 72 for sealing the flow channels by contacting with the outer circumferential surface of the pipe 2 are provided in the insertion hole 20 of the housing 6.

Also, at this time, in a state wherein the inclined surface 11a of the collar 11 of the pipe 2 abuts against an inner circumferential surface 9a which has a taper shape, the slide component 9 is in a state of being moved forward up to an abutting position against the connecting display component 8 against the urging force of the spring 54. At the abutting position against this connecting display component 8, as shown in Fig. 8(A), the slide component 9 is in a state wherein the pair of projecting pieces 51 is respectively abutted against the pair of engaging pieces 44 of the connecting display component 8. Also, as shown in Fig. 8(B), the connecting display component 8 is in a state wherein a pair of front locking claws 47 provided in the connecting release portion 42 abuts against a margin portion 73a of a slit 73 provided in the main body cover 3 and forming an approximately cross-like shape, and wherein the forward movement is controlled.

In a state shown in Fig. 4, although the connector 1 and the pipe 2 are in an adequately connected state, the connector 1 is in the connecting confirmation nondisplay state, and the user cannot confirm the completion of connection. Consequently, the user is required to push the pipe 2 forward further from the state shown in Fig. 4 as shown in Fig. 5 in order to allow the connector 1 to be in the connecting confirmation display state.

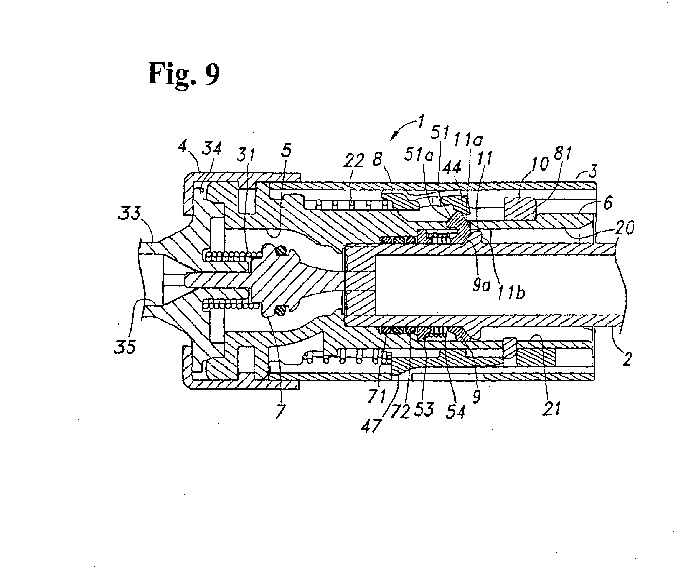

At this time, as shown in Fig. 9, the projecting pieces 51 in the slide component 9 are inserted into the lower side of the engaging pieces 44 of the connecting display component 8, and along an inclined surface 51a on the front side thereof, the back end side of the locked portion 41 is elastically deformed so as to be lifted upward (outside of the radial direction). Thereby, in the connecting display component 8, the back locking claw 43 thereof goes over the convex piece 24 of the housing 6 so that the locked state is released, and as shown in Fig. 5, due to the urging force of the spring 22, the connecting display component 8 moves up to a backward connecting display position. The back locking claw 43 is retained in a state abutting against a step portion 81 of the housing 6. Thereby, as shown in Fig. 1(B), the connecting display component 8 is exposed from the display window 15.

In this manner, with the structure in which the connecting display component 8 is moved to the connecting display position without directly contacting with the pipe 2, a false display (i.e., despite the unconnected state between the connector 1 and the pipe 2, the connecting display component 8 becomes the connecting confirmation display state) of the completion of connection state is preventable. Also, since the structure is made so as to release the locked state of the connecting display component 8 by further pushing the pipe 2 inserted into the connector 1 forward from the regular connecting position, the false display of the completion of connection can be preventable more reliably. In this case, when the connecting display component 8 moves to the connecting display position, an adequate clicking sound is generated when the back locking claw 43 abuts against the step portion 81 of the housing 6, so that the user can confirm the completion of connection not only visually but also by the sound. Additionally, since a vibration when the back locking claw 43 thereof abuts, transmits to a user's hand which grasps the connector 1 and the pipe 2, the user can confirm the completion of connection even by a sensation in the hand.

In Fig. 5, if the connector 1 becomes the connecting confirmation display state and the user stops pushing the pipe 2 in, due to the urging force of the spring 54, the slide component 9 (pipe 2) is pushed backward, and as shown in Fig. 6, the collar 11 of the pipe 2 is inserted between the slide component 9 and the lock component 10 again.

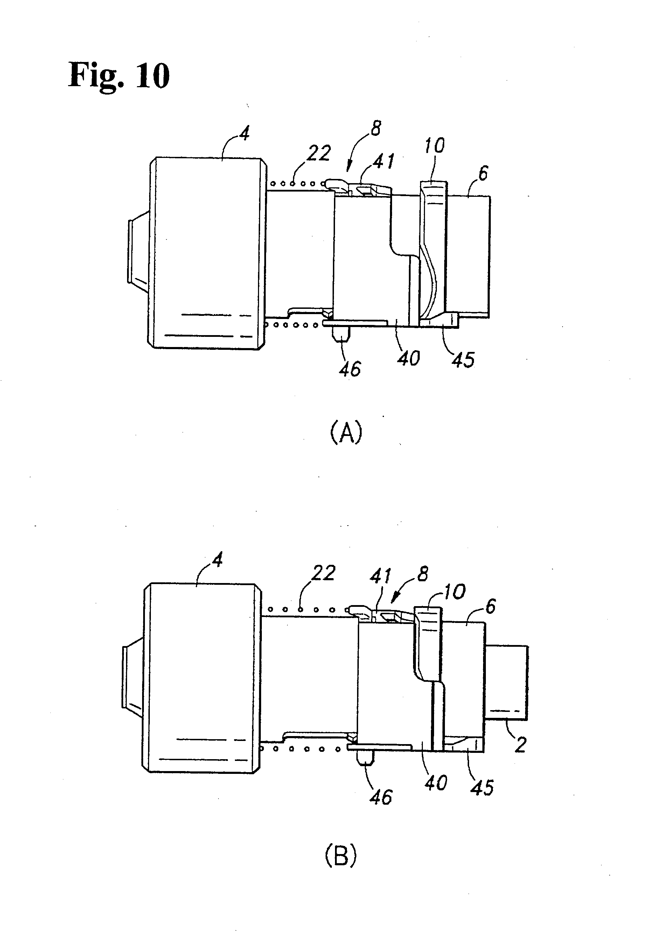

Also, the connector 1 includes the structure in which the clamping and fixing of the pipe 2 by the lock component 10 can be reinforced due to the change from the connecting confirmation nondisplay state (see Fig. 4) to the connecting confirmation display state (see Fig. 6) as mentioned above. Namely, in the connecting confirmation nondisplay state, as shown in Fig. 10(A), the half circular portion 40 of the connecting display component 8 which is in the initial position is in a state not covering the lock component 10. However, in the connecting confirmation display state, as shown in Fig. 10(B), the half circular portion 40 of the connecting display component 8, which has moved to the connecting display position, becomes a state covering the outer circumferential surface of the fixing portions 61 (opening-expanding portions) of the lock component 10. Thereby, in the connecting confirmation display state, the opening-expanding of the lock component 10 is controlled, and even in a case that a force of a pull-out direction (backward) is abruptly applied to the pipe 2, disengagement of the pipe 2 can be prevented, and the connected state between the connector 1 and the pipe 2 can be reliably maintained.

In the connected state shown in Fig. 6, the user moves the operation claw 46 of the connecting display component 8, which is exposed from the slit 73 of the main body cover 3, forward by a hand operation or using appropriate jigs while pushing the operation claw 46 into the inside.

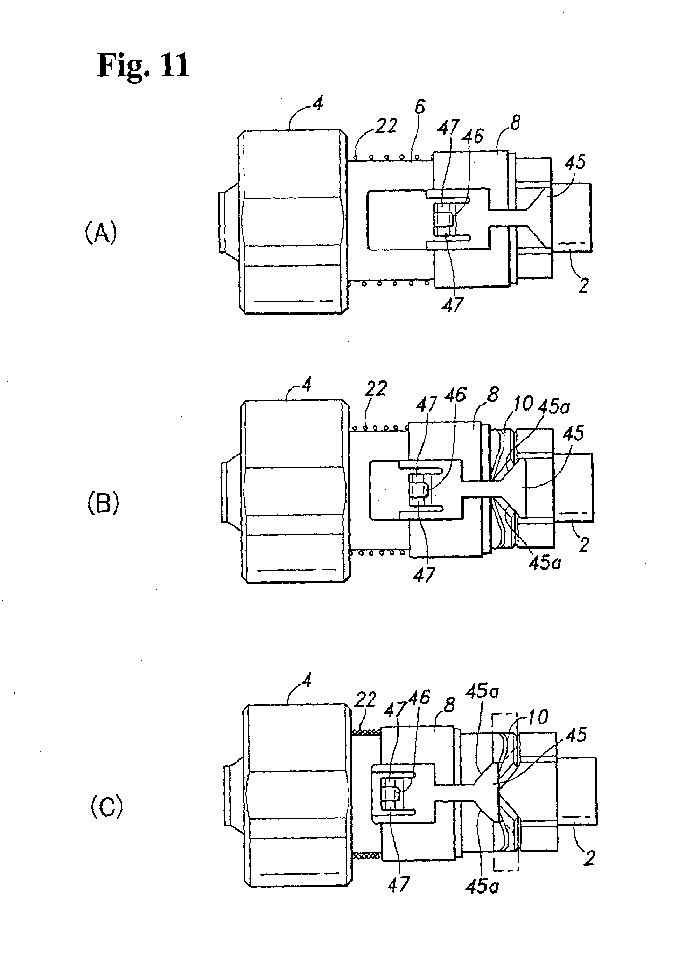

At this time, the connecting display component 8 moves forward as shown in Fig. 11(B) from the connected state (connecting display position) shown in Fig. 11(A), so that the triangular piece 45 thereof becomes a state fitted into a gap between both end portions of the lock component 10 by insertion. Then, from this state, the connecting display component 8 moves forward further, so that as shown by chain double-dashed lines in Fig. 11(C), the gap of the lock component 10 is pushed open along two sides 45a of the triangular piece 45, so that the clamping and fixing of the pipe 2 by the lock component 10 become a released state. In this case, the back locking claw 43 goes over an inclined surface 24a (see Fig. 7) on a rear side of the convex piece 24 in the housing 6, so that the connecting display component 8 can easily move forward. Thereby, as shown in Fig. 7, the user can pull out the pipe 2 by releasing the connected state.

### <Second embodiment>

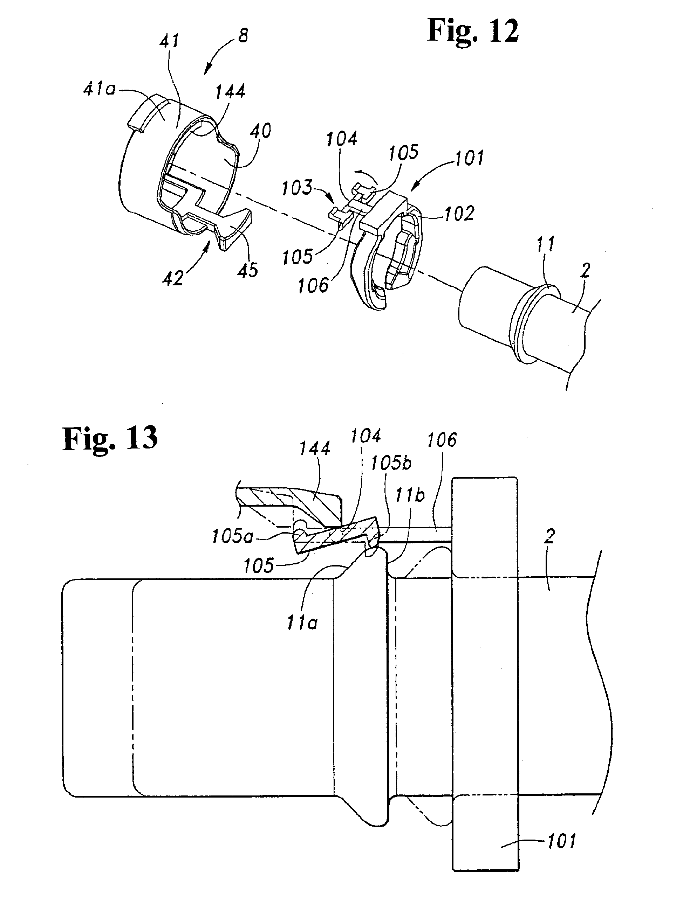

Fig. 12 is an exploded perspective view of essential parts of the connector comprising the connection confirming mechanism according to a second embodiment of the present invention, and Fig. 13 is an explanatory drawing of a connecting confirmation display operation of the connector. Here, the same symbols are assigned to the components similar to those of the first embodiment, and items which are not specially mentioned including components which are not shown in the figures, are the same as those in the case of the first embodiment.

In Fig. 12, the connector comprises a new lock component 101 which fulfills functions of both the slide component 9 and the lock component 10 as an alternative component of the slide component 9 and the lock component 10 shown in Fig. 2. In this case, the connecting display component 8 does not include a notched portion around the locked portion 41 as shown in the first embodiment, and also the back locking claw 43 provided between both the engaging pieces 44 becomes unnecessary, so that one engaging piece 144 is formed. The lock component 101 includes a pipe fixing portion 102 which functions approximately in a similar way to the lock component 10 in Fig. 2, and a locking portion 103 provided in a front upper portion thereof. The locking portion 103 includes a bar-like piece 104, release pieces (turning pieces) 105 connected to both ends of this bar-like piece 104, and a connecting piece 106 connecting the bar-like piece 104 with the pipe fixing portion 102. The locking portion 103 is formed so as to be elastically deformable in an embodiment wherein the release pieces 105 turn as an axis of the bar-like piece 104.

In the case that the connector is in the unconnected state, or in the case that the connector is in the connected state (however, the connecting confirmation nondisplay state), as shown by chain double-dashed lines in Fig. 13, the release pieces 105 are in the state locking the engaging piece 144 of the connecting display component 8 by front end portions 105a thereof. Then, if the pipe 2 is further pushed into the front from the regular connecting position in a similar way to the case of Fig. 5, as shown by solid lines in Fig. 13, back end portions 105b of the release pieces 105 are pushed up by the inclined surface 11a of the collar 11 of the pipe 2, and the release pieces 105 turn, so that the front end portions 105a thereof descend and the locked state is released. By using such lock component 101, the structure of the connector 1 is simplified, so that there is the advantage of enabling to reduce a manufacturing cost.

### <Third embodiment>

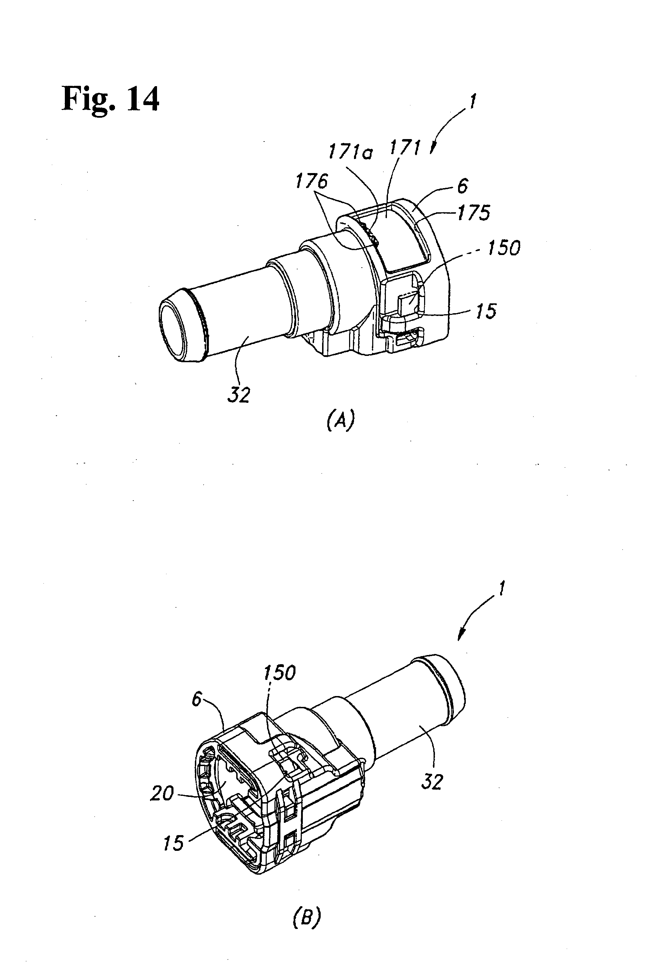

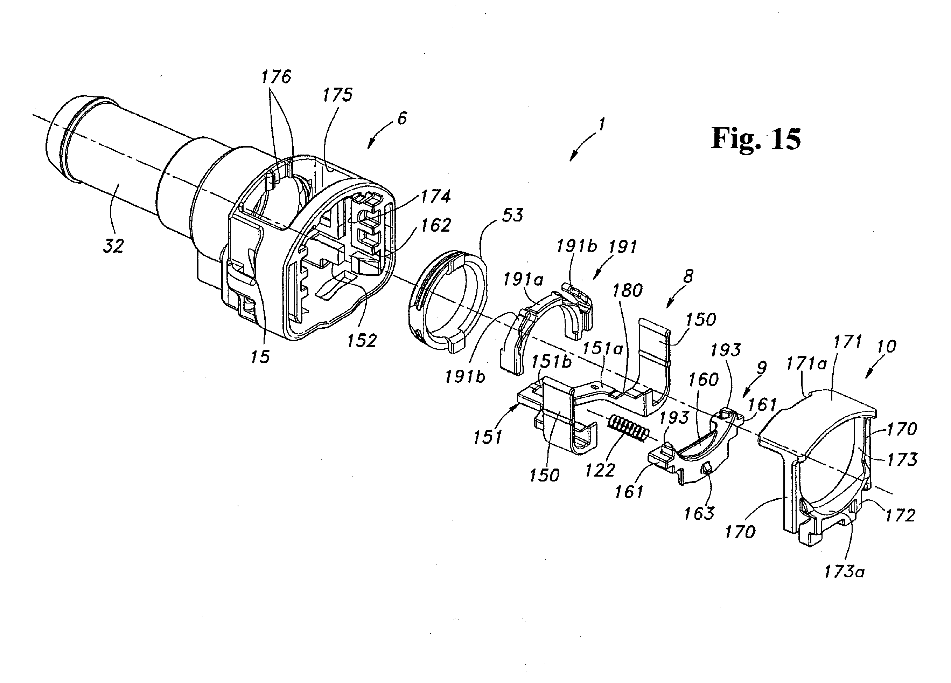

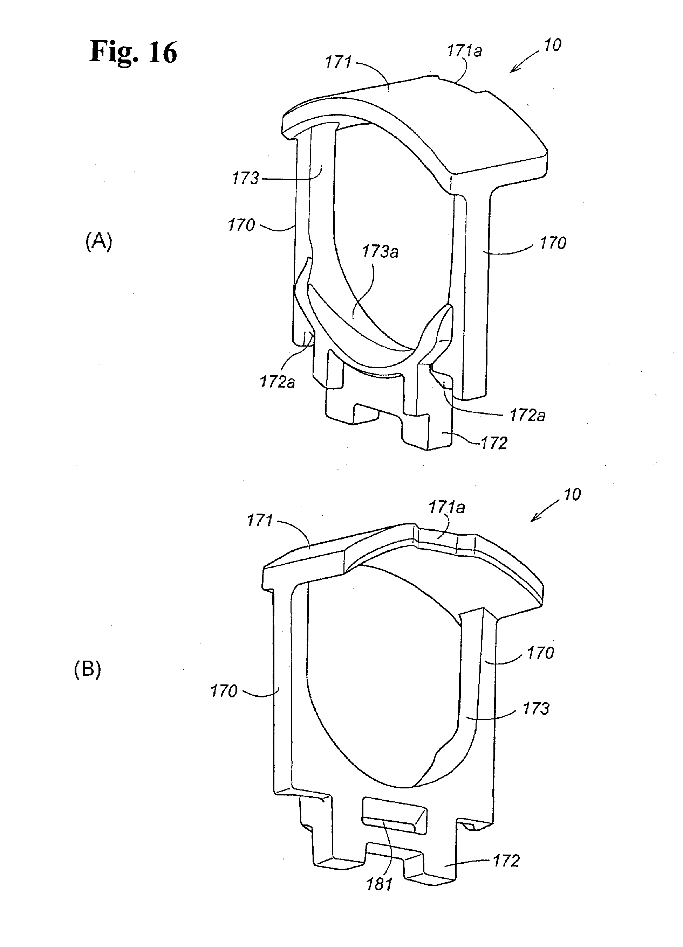

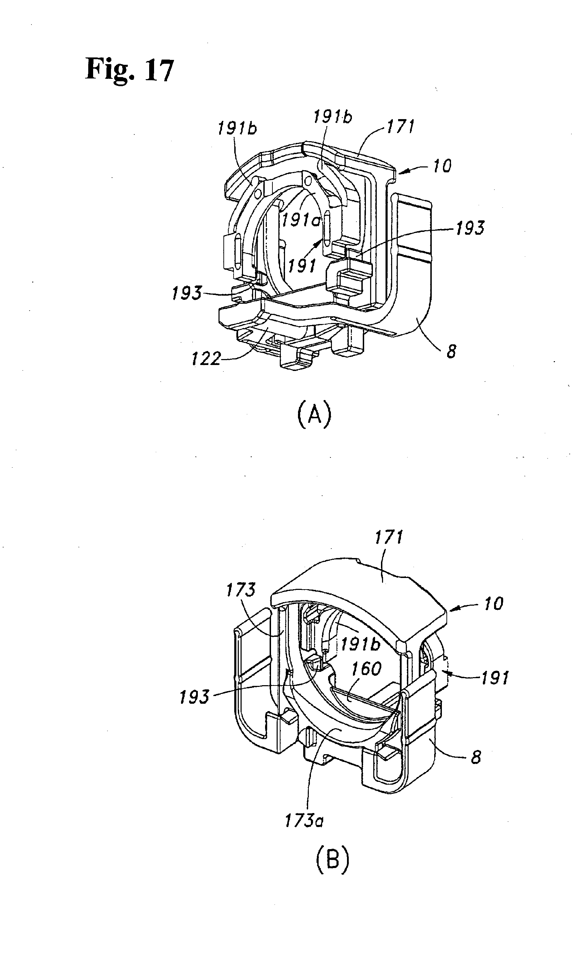

Figs. 14(A), 14(B) are perspective views of the connector comprising the connection confirming mechanism according to a third embodiment of the present invention viewed from a front side and a back side; Fig. 15 is an exploded perspective view of the essential parts of the connector; Figs. 16(A), 16(B) are perspective views of the lock component viewed from the front side and the back side; and Figs. 17(A), 17(B) are assembly perspective views of the connecting display component, the slide component, the lock component, and a checker plate in the unconnected state. Here, the same symbols are assigned to the components similar to those of the first embodiment, and the items which are not specially mentioned are the same as those in the case of the first embodiment.

In the connector 1 according to the third embodiment, the housing 6 forms the outer shell thereof, and the main body cover 3 and the end cover 4 in the first embodiment are omitted. On right-and-left side walls of the housing 6, the display window 15 which opens to the back side is provided. As shown by the chain double-dashed lines in Fig. 14(A), at the time of the completion of connection between the connector 1 and the pipe 2, the connecting display component 8 is exposed from the display window 15 so as to move forward.

As shown in Fig. 15, the connecting display component 8 includes right-and-left side walls 150 which are components exposed from the display window 15 of the housing 6, and a bottom wall 151 which is connected to the side walls 150 and also has an approximately convex shape at the back in a planar view. A wide portion 151a on the back side of the bottom wall 151 is slidably fitted into a guide groove 152 which extends in the front and back direction inside the housing 6 by insertion. Thereby, the movement in the front and back direction of the connecting display component 8 can be smoothly carried out.

The slide component 9 is provided with a half-moon-shaped abutting plate 160 wherein the collar 11 (see Fig. 1(A)) of the pipe abuts, in the center portion thereof. Convex portions 161 which project to right and left of the slide component 9 are slidably fitted into a guide groove 162 extending in the front and back direction inside the housing 6 by insertion. Thereby, the movement in the front and back direction of the slide component 9 is smoothly carried out. At the front face of the slide component 9, a locking claw 163 for locking the lock component 10 is provided.

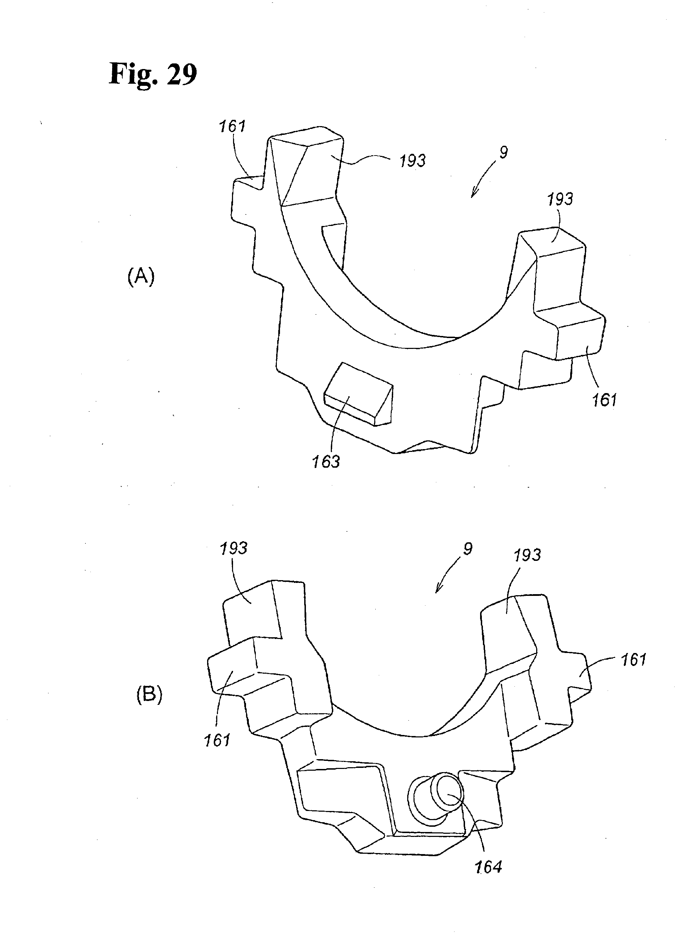

A spring 122 is connected to the connecting display component 8 and the slide component 9 at both ends thereof. While a front end portion of the spring 122 is housed inside a narrow portion 151b in the bottom wall 151 of the connecting display component 8, a spring locking projection 164 (see Fig. 29(B)) provided in the front face of the slide component 9 is inserted to a back end portion of the spring 122.

The lock component 10 includes both side portions 170 which vertically extend, and an upper portion 171 and a lower portion 172 respectively connected to an upper end and a lower end of the both side portions 170 thereof. By these respective portions, an opening 173 wherein the pipe penetrates is formed.

Both side portions 170 are slidably fitted into a guide groove 174 extending in an up and down direction inside the housing 6 by insertion. Thereby, the movement in the up and down direction of the lock component 10 is smoothly carried out.

The upper portion 171 has a plate-like shape which enables to be fitted into an opening 175 of the housing 6, and in the unconnected state, as shown in Fig. 14(A), the upper portion 171 is in a sunken state. On the other hand, in the completion of connection state, due to the rise of the lock component 10, the upper portion 171 blocks the opening 173 of the housing 6. At this time, two guide projections 176 provided in a front margin of the opening 175 of the housing 6 are fitted into a notched portion 171a provided in the front margin of the upper portion 171 by insertion. Thereby, a blocking operation of the opening 175 of the housing 6 due to the upper portion 171 can be easily carried out.

As shown in Figs. 17(A), 17(B), the lower portion 172 is mounted inside the wide portion 151a of the bottom wall 151 relative to the connecting display component 8 so as to be sandwiched between the right-and-left side walls 150 thereof. At this time, inclined surfaces 172a (see Fig. 16(A)) provided in the lower portion 172 slide and contact a cam surface 180 (see Fig. 15) in the connecting display component 8. The cam surface 180 comprises two upper and lower horizontal portions and an inclined portion disposed in the interval thereof, and guides a rising operation of the lock component 10. As shown in Fig. 16(B), at the front face of the lower portion 172, a locked hole 181, wherein the locking claw 163 of the slide component 9 is inserted, is provided. Incidentally, a structure is possible, wherein a cam surface similar to the cam surface 180 is provided on a lock component 10 side.

In an assembly state shown in Figs. 17(A), 17(B), the connecting display component 8 is in a state urged forward (a connecting display position side) by the spring 122. At this time, the urging force of the spring 122 acts in a direction which raises the lock component 10. However, since the slide component 9 is urged backward (the lock component 10 side) by the spring 122, the locking claw 163 thereof locks the locked hole 181 of the lock component, so that the rise (i.e., the sliding of the inclined surfaces 172a on the cam surface 180) of the lock component 10 is blocked.

Also, on the upper front of the slide component 9, a checker plate 191 (control component) is provided for preventing a false operation of the connection confirming mechanism of the connector. In the unconnected state, the checker plate 191 is disposed such that both lower ends of a half-circular portion 191a are overlaid on a front side of right-and-left projecting pieces 193 of the slide component 9, so that the forward movement of the slide component 9 is controlled. Also, on an upper portion of the half-circular portion 191a, a right-and-left pair of elastic pieces (elastic deformation portions) 191b is projected. Free ends of the elastic pieces 191b are in a state abutting against the upper portion 171 of the lock component 10 from the underside.

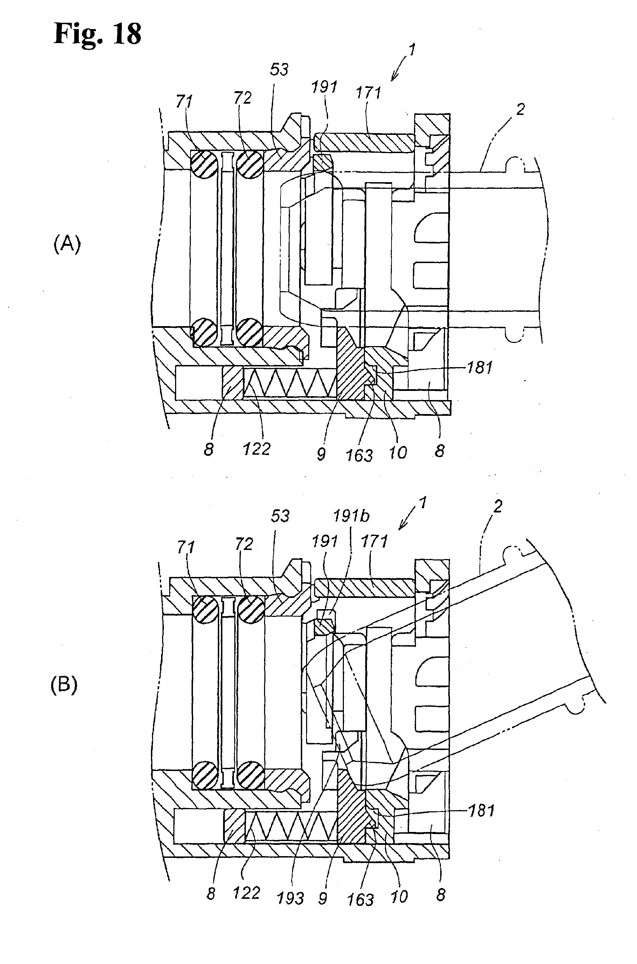

As shown in Fig. 18(A), if the pipe 2 is inserted into the connector 1 in a regular direction (axis line direction), the outer circumferential surface of the pipe 2 abuts against the inside of the half-circular portion 191a of the checker plate 191. Thereby, while elastically deforming the elastic pieces 191b, which abut against a lower surface of the upper portion 171 of the lock component 10, the checker plate 191 is pushed upward. As a result, both lower ends of the half-circular portion 191a rise up to a position, which does not overlap with the projecting pieces 193 of the slide component 9, and the forward movement of the slide component 9 is allowable. On the other hand, as shown in Fig. 18(B), if the pipe is inserted into the connector 1 in an inappropriate direction (i.e., at a tilt from the axis line direction), the pipe 2 does not abut against the checker plate 191, and the forward movement of the slide component 9 remains controlled. With such structure, the pipe 2 can prevent the false operation of the connection confirming mechanism due to an inappropriate insertion.

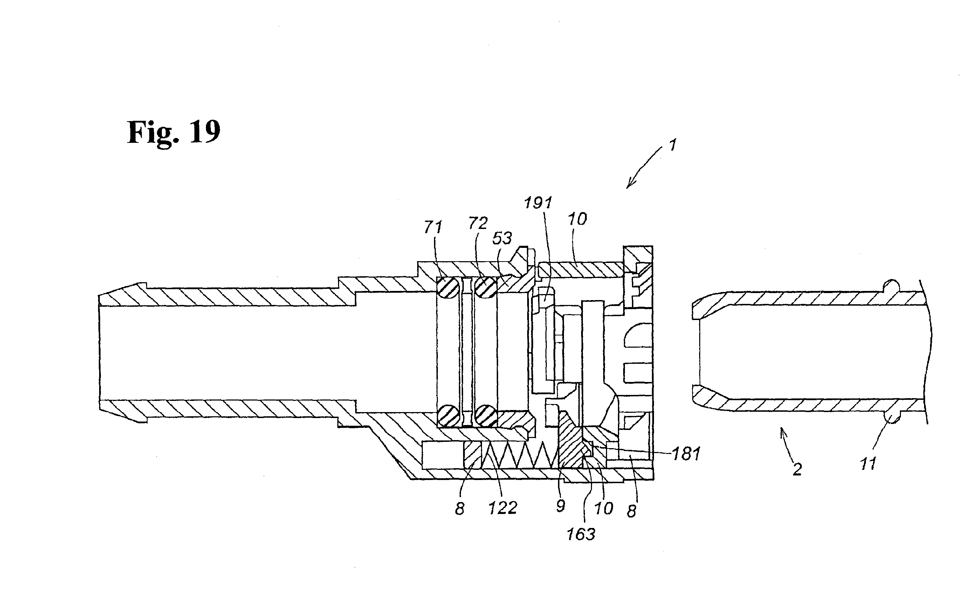

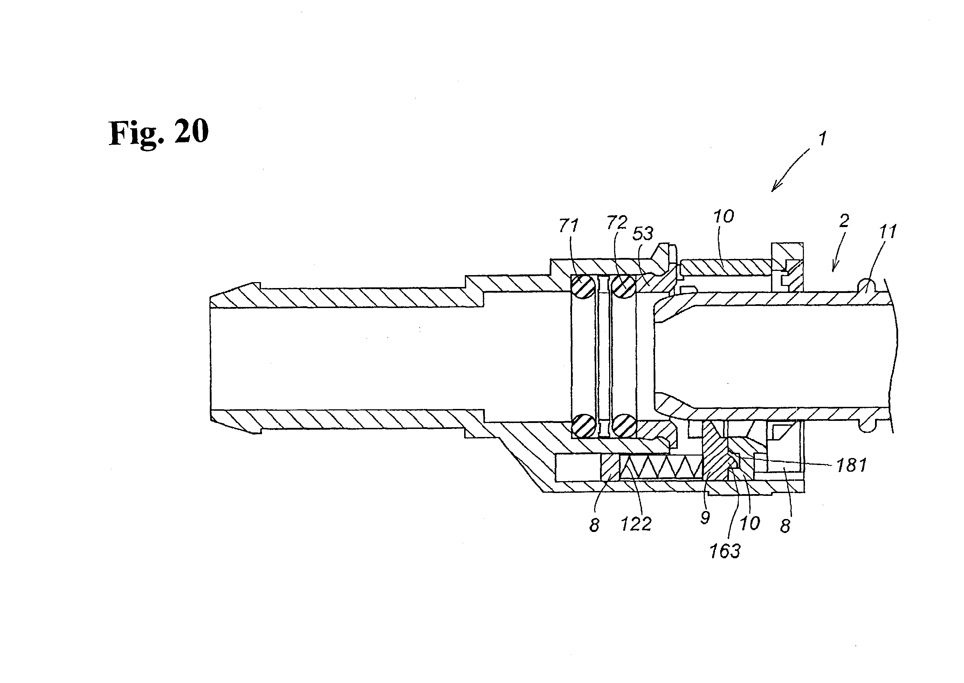

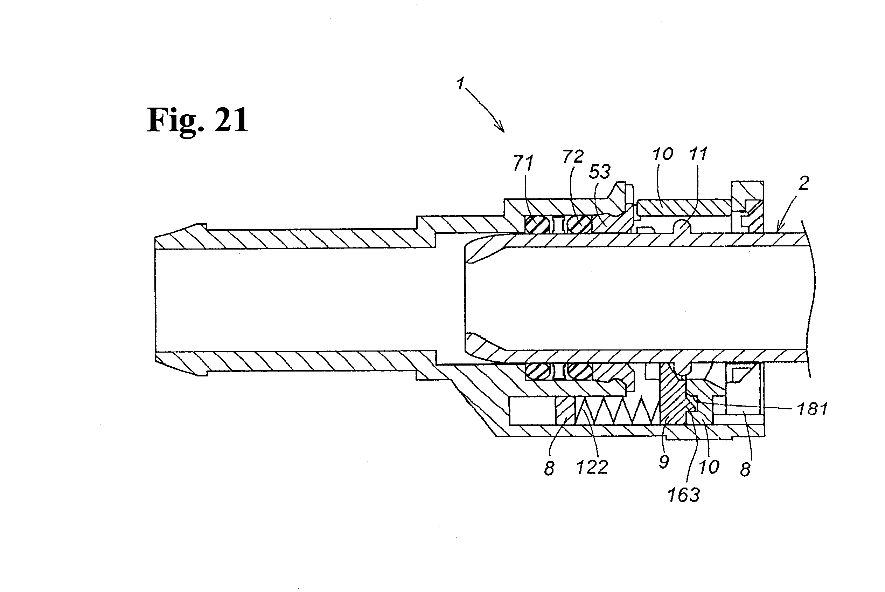

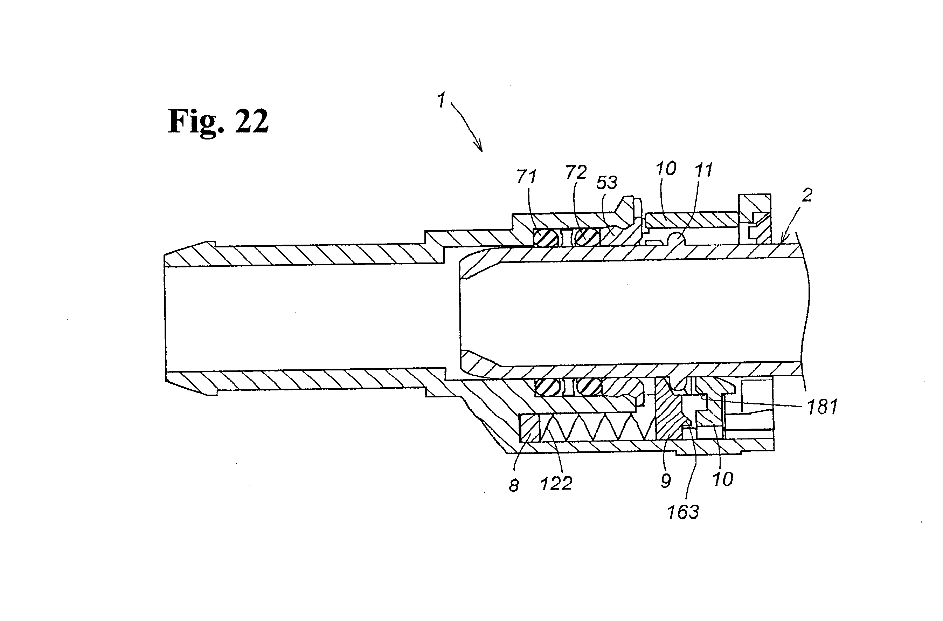

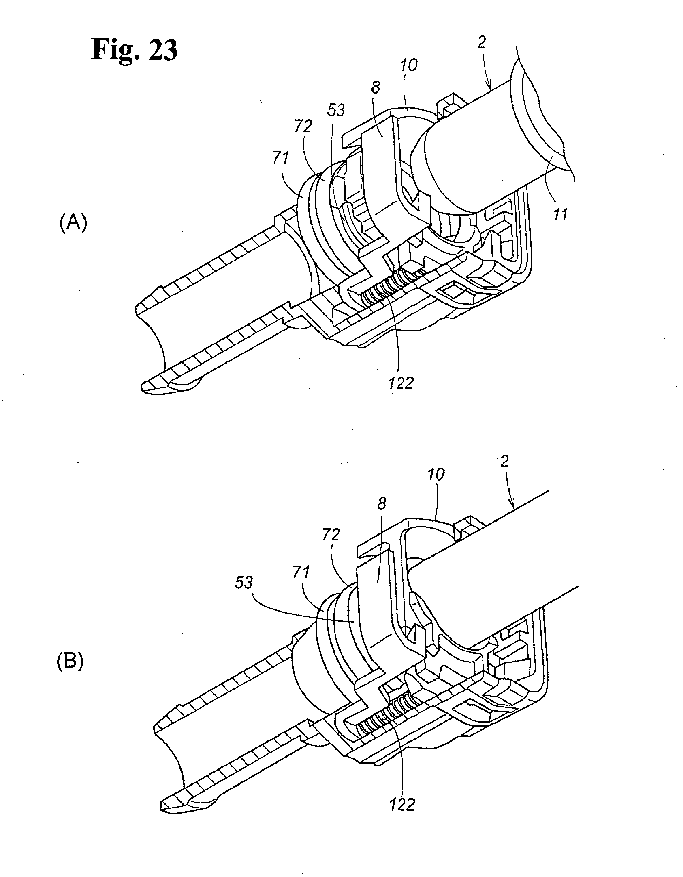

Next, details of the connecting operation between the connector and the pipe according to the above-mentioned third embodiment will be explained. Figs. 19 to 22 are cross sectional views showing the series of the operation states of the connector, and Fig. 22 is a partially exploded perspective view of the connector. Here, Fig. 19 shows the connector in the unconnected state, Figs. 20 and 21 show the connector on the way of being connected with the pipe, and Fig. 22 shows the connector which is in the completion of connection state. Also, Figs. 23(A), 23(B) respectively correspond to the states in Figs. 18(A), 18(B), and 21.

As shown in Fig. 19, in the connector 1 which is in the unconnected state, as shown in Figs. 17(A), 17(B) as well, the connecting display component 8 is retained in the initial position in the state being urged backward by the spring 122. At this time, an inclined portion of the cam surface 180 abuts against the inclined surfaces 172a (see Fig. 16(A)) of the lock component 10 which are locked in the slide component 9, so that the connecting display component 8 is in the locked state.

Next, as shown in Fig. 20, if the pipe 2 is inserted into the connector 1 in the regular direction, the pipe 2 pushes the checker plate 191 up, and the movement control of the slide component 9 is released. Then, as shown in Fig. 21, if the pipe 2 is further inserted, the collar 11 thereof abuts against the abutting plate 160 of the slide component 9, and the slide component 9 is moved forward against the urging force of the spring 122. Thereby, the locking of the lock component 10 due to the slide component 9 is released, and at the same time, the locking of the connecting display component 8 due to the lock component 10 is also released.

As a result, as shown in Fig. 22, the connecting display component 8 moves forward due to the urging force of the spring 122, and at the same time, the inclined surfaces 172a of the lock component 10 move on the cam surface 180 of the connecting display component 8, and the lock component 10 rises. Thereby, a lower margin 173a of the opening of the lock component 10 abuts against the outer circumferential surface of the pipe 2, and the pipe 2 is clamped and fixed between the lower margin 173a thereof and an inner surface of the housing 6. Also, the connecting display component 8 moves forward and is exposed from the display window 15 (see Fig. 14(A)). Incidentally, in the state shown in Fig. 22, the user of the connector 1 pulls the pipe 2 backward while pushing the upper portion 171 of the lock component 10 and the connecting display component 8 into the housing 6, so that the connector 1 can be in an unfastened state again.

### <Fourth embodiment>

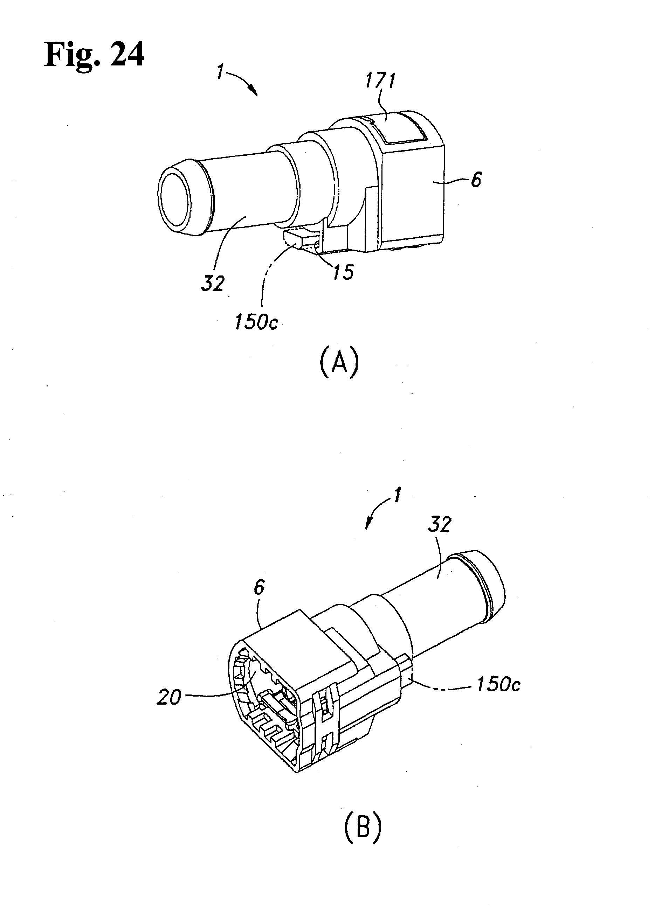

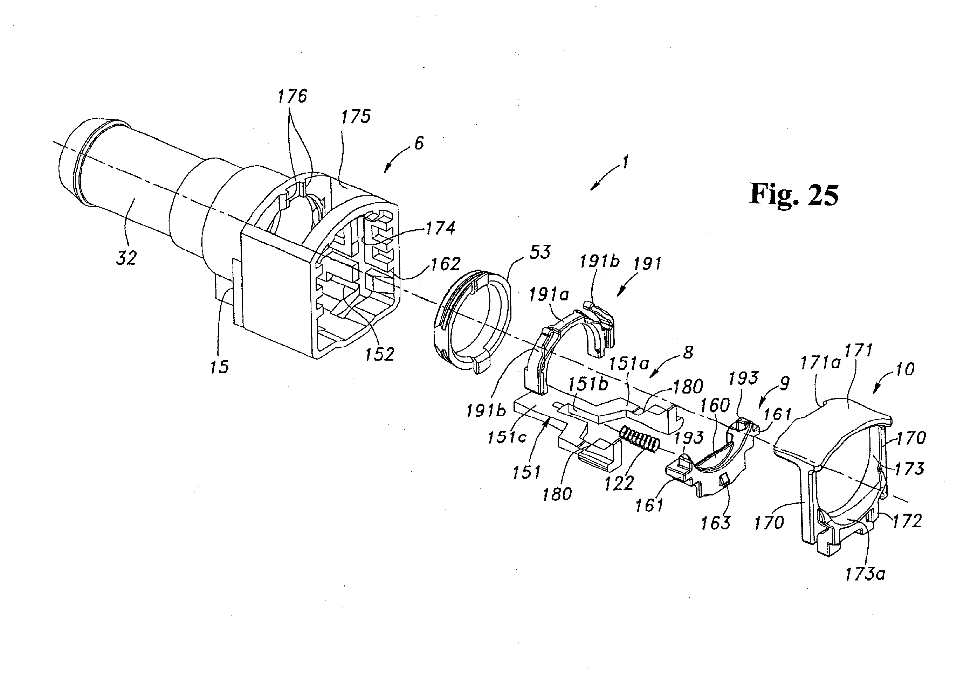

Figs. 24(A), 24(B) are perspective views of the connector comprising the connection confirming mechanism according to a fourth embodiment of the present invention viewed from a front face side and a back face side, and Fig. 25 is an exploded perspective view of the essential parts of the connector. Here, the same symbols are assigned to the components similar to those of the third embodiment, and the items which are not specially mentioned are the same as those in the case of the third embodiment.

As for the connector 1 according to the fourth embodiment, a shape of the connecting display component 8 and an exposed configuration thereof differ from those in the case of the third embodiment. Here, a front end portion 151c of the bottom wall 151 of the connecting display component 8 extends forward, and this extended front end portion 151c is exposed so as to be projected forward from the display window 15 of the housing 6 at the time of the completion of connection as shown in Figs. 24(A), 24(B).

### <Fifth embodiment>

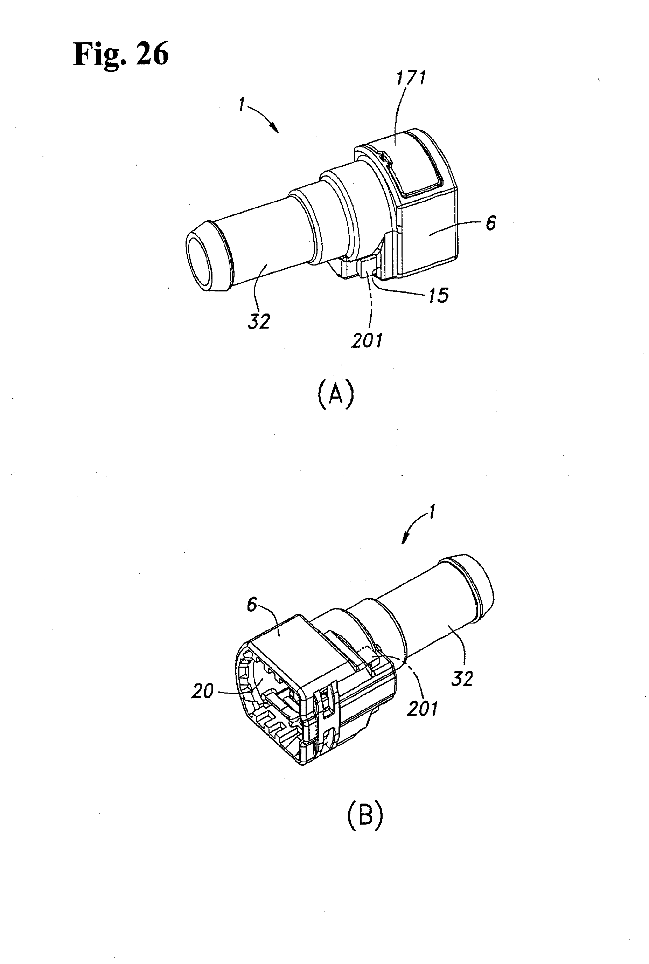

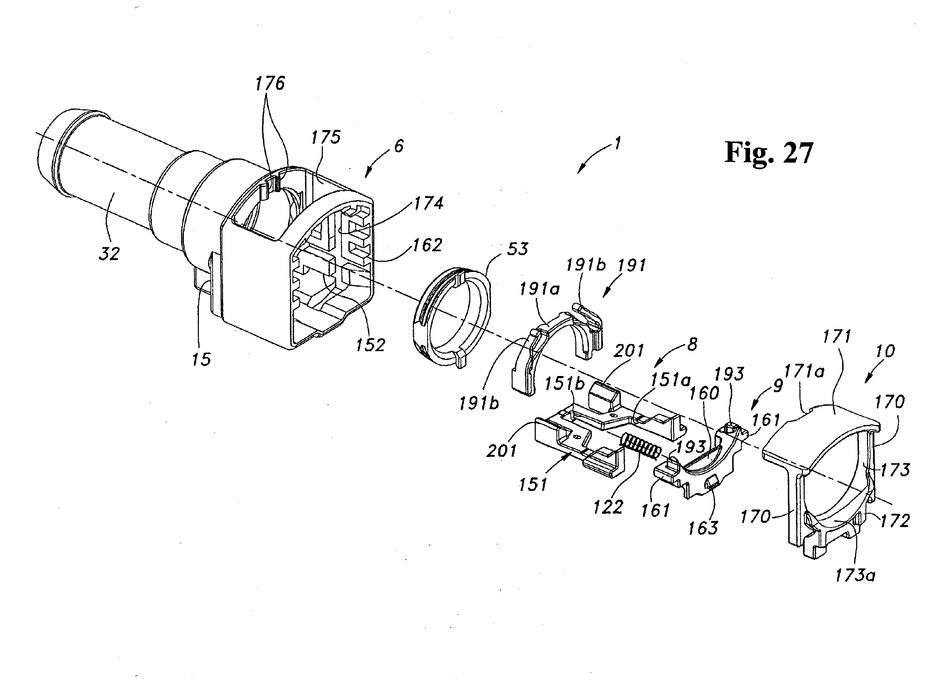

Figs. 26(A), 26(B) are perspective views of the connector comprising the connection confirming mechanism according to a fifth embodiment of the present invention. Fig. 27 is an exploded perspective view of the essential parts of the connector. Here, the same symbols are assigned to the components similar to those of the third embodiment, and the items which are not specially mentioned are the same as those in the case of the third embodiment.

As for the connector 1 according to the fifth embodiment, the shape of the connecting display component 8 and the exposed configuration thereof differ from those in the case of the third embodiment. Here, a right-and-left pair of exposed pieces 201 is provided on the front side of the wide portion 151a of the bottom wall 151 of the connecting display component 8. As shown in Figs. 26(A), 26(B), the exposed pieces 201 are exposed so as to project forward from the display window 15 of the housing 6 at the time of the completion of connection.

### <Sixth embodiment>

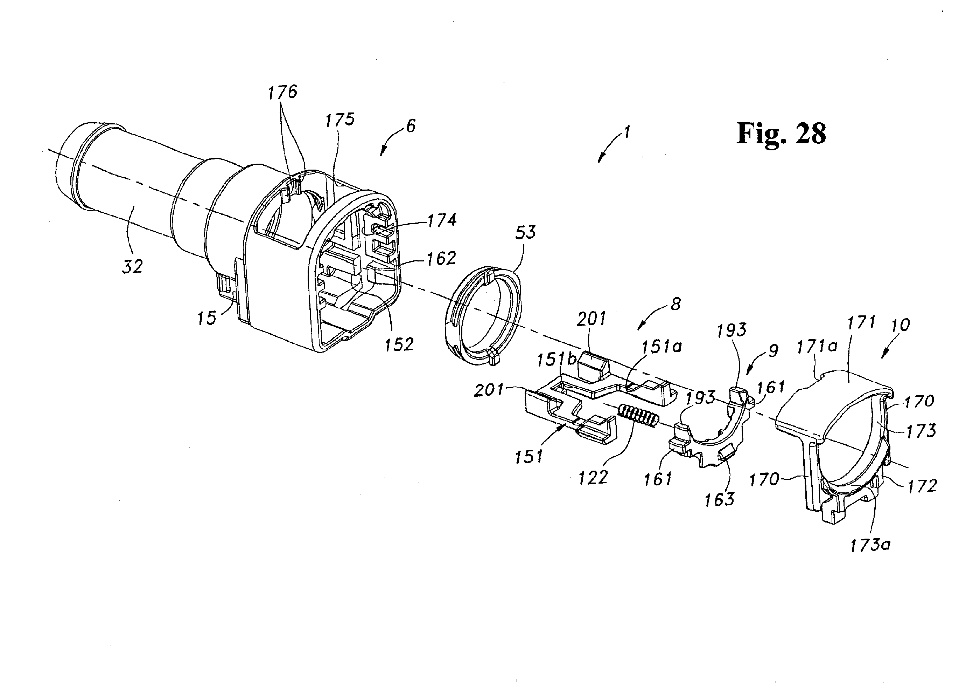

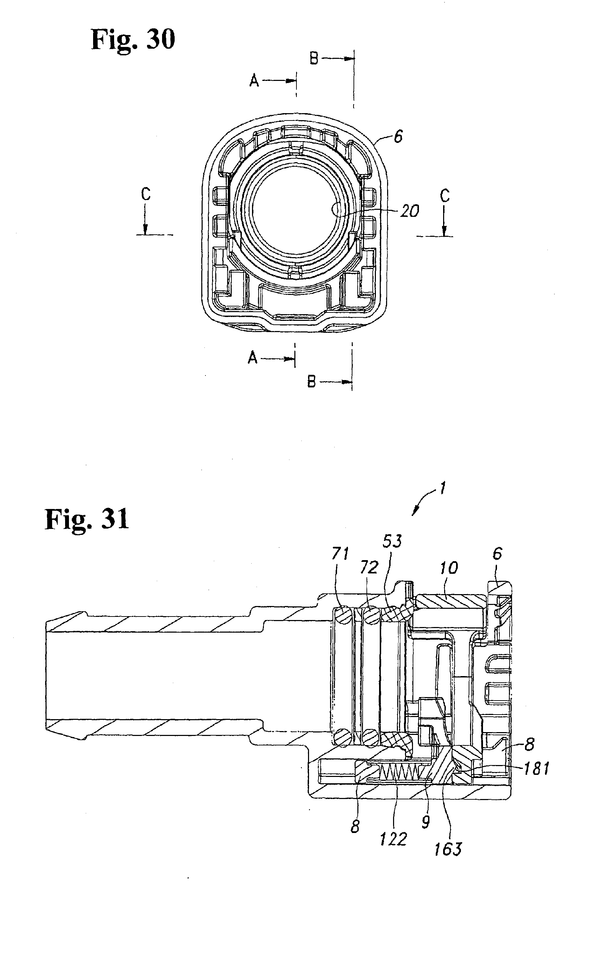

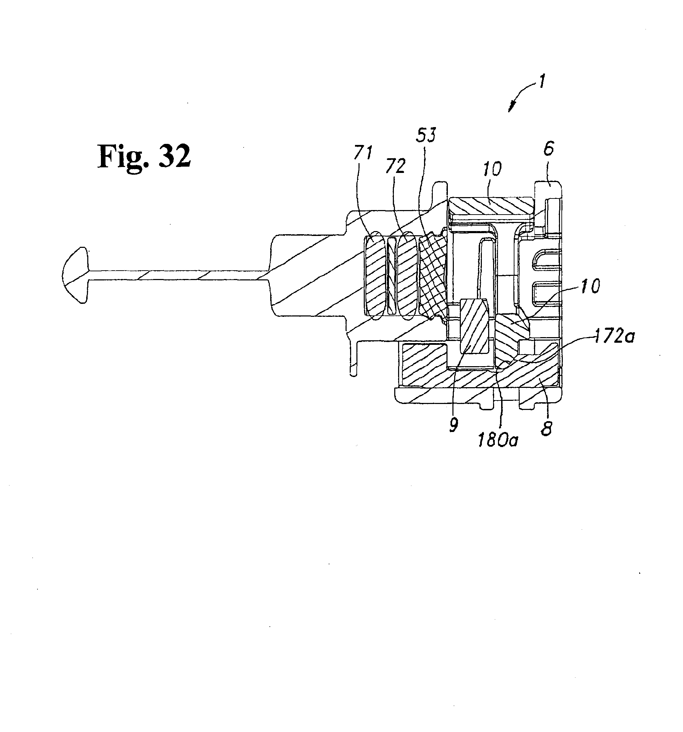

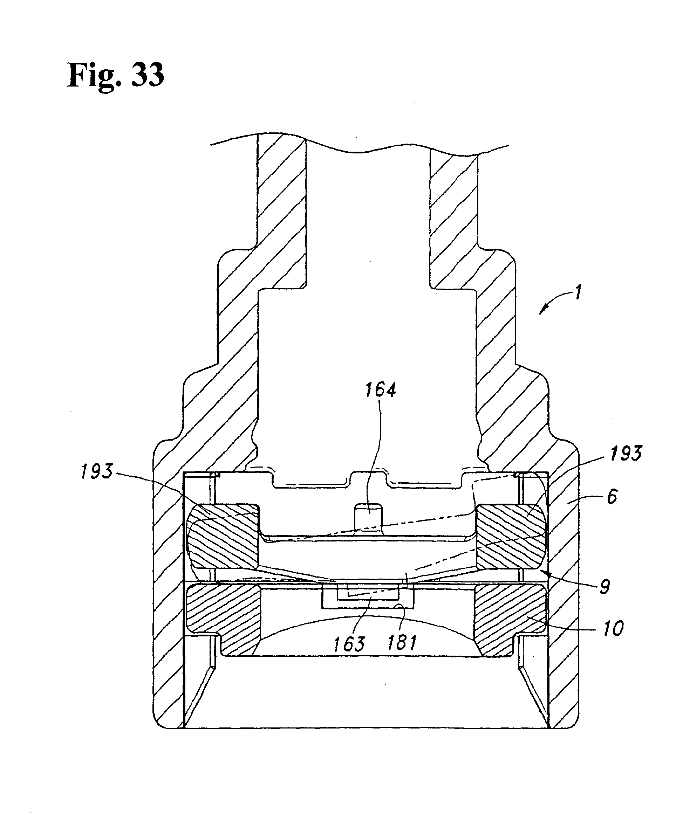

Fig. 28 is an exploded perspective view of the essential parts of the connector comprising the connection confirming mechanism according to a sixth embodiment of the present invention, Figs. 29(A), 29(B) are perspective views of the slide component viewed from the front face side and the back face side, Fig. 30 is a back view of the connector, Fig. 31 is a sectional view taken along line A-A in Fig. 30, Fig. 32 is a sectional view taken along line B-B in Fig. 30, and Fig. 33 is a sectional view taken along line C-C in Fig. 30. Here, the same symbols are assigned to the components similar to those of the fifth embodiment, and the items which are not specially mentioned are the same as those in the case of the fifth embodiment.

The connector 1 according to the sixth embodiment differs from that in the case of the fifth embodiment in that a shape of the slide component 9 is changed, and also in that the checker plate 191 is omitted. As shown in Figs. 29(A), 29(B), in the slide component 9, the abutting plate 160 is omitted, and also the right-and-left projecting pieces 193 are changed to a shape which protrudes into the inside.

As shown in Figs. 31, 32, as for the connector 1 which is in the unconnected state, an inclined portion 180a on the cam surface of the connecting display component 8 is in the locked state by abutting against the inclined surfaces 172a of the lock component 10 which is locked in the slide component 9. At this time, the slide component 9 is urged backward by the spring 122 disposed between the slide component 9 and the connecting display component 8, so that the locked hole 181 of the lock component 10 is locked by the locking claw 163.

A distance between the right-and-left projecting pieces 193 of the slide component 9 is set slightly smaller than that of an outer diameter of the pipe 2. Thereby, in the case that the pipe 2 is inserted in the regular direction, while the end of the pipe 2 abuts against both projecting pieces 193 of the slide component 9, in the case that the pipe 2 is inserted in an inappropriate direction, the end of the pipe 2 abuts only against any one of the projecting pieces 193.

More specifically, as shown in Fig. 33, in the case that the pipe 2 is inserted in the regular direction, the end of the pipe 2 abuts against both projecting pieces 193, and the slide component 9 is pushed out forward so as to move parallel. Thereby, the locking claw 163 of the slide component 9 is pulled out of the locked hole 181 of the lock component 10, so that the rising operation of the lock component 10 is allowable. On the other hand, in the case that the pipe 2 is inserted in the inappropriate direction, the end of the pipe 2 abuts only against any one (here, the right side) of the projecting pieces 193, so that the slide component 9 turns in one direction (here, counterclockwise) as shown by chain double-dashed lines in Fig. 33. Thereby, a part of the locking claw 163 of the slide component 9 remains inserted in the locked hole 181 of the lock component 10, so that the locked state of the lock component 10 is maintained. Thus, with a simplified structure wherein the checker plate 191 of the fifth embodiment is omitted, the pipe 2 can prevent the false operation of the connection confirming mechanism due to the inappropriate insertion.

### <Seventh embodiment>

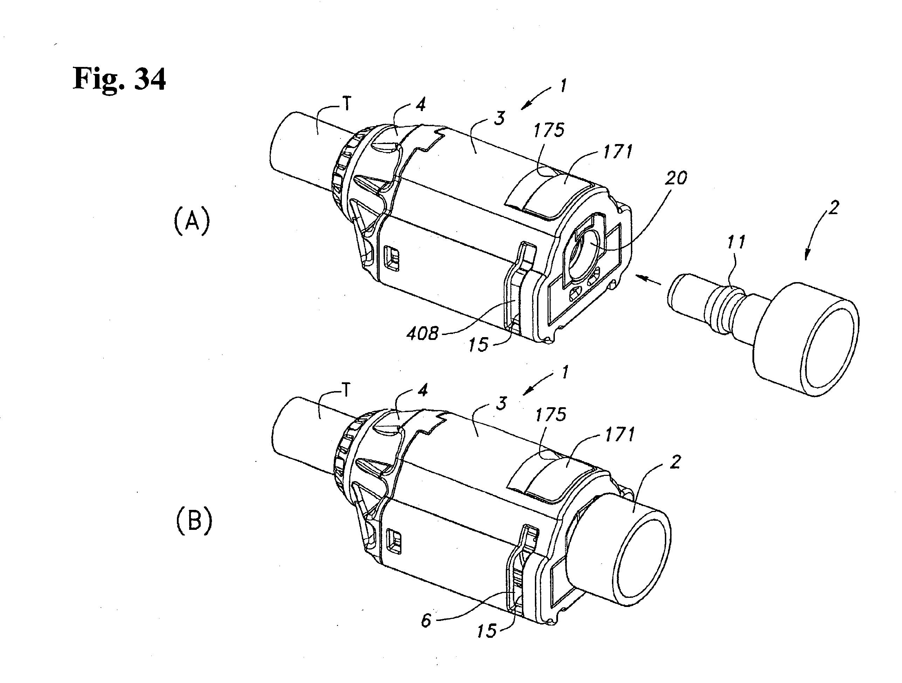

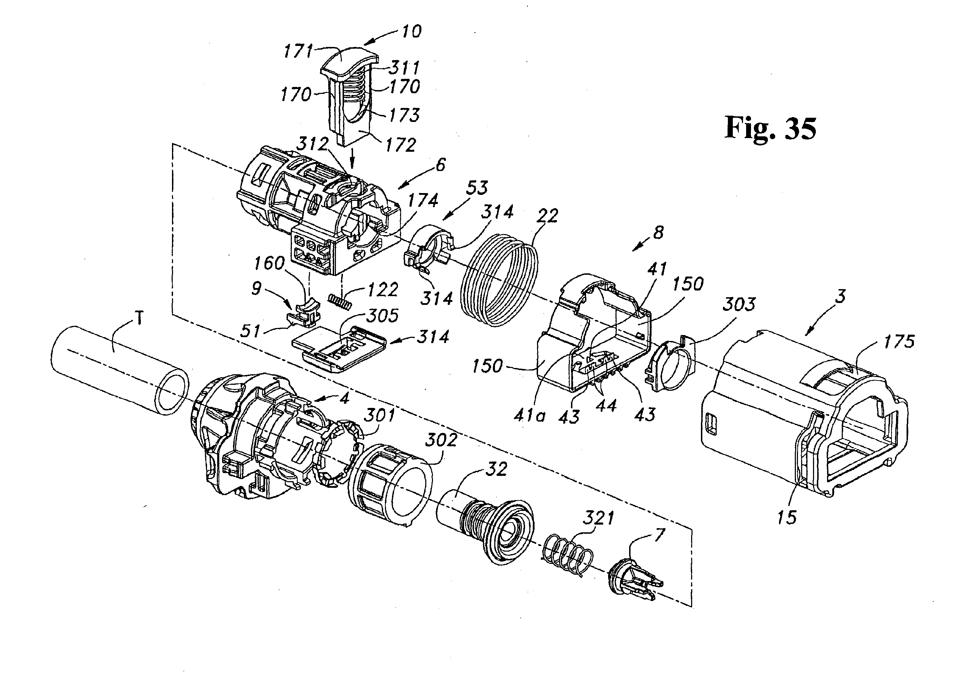

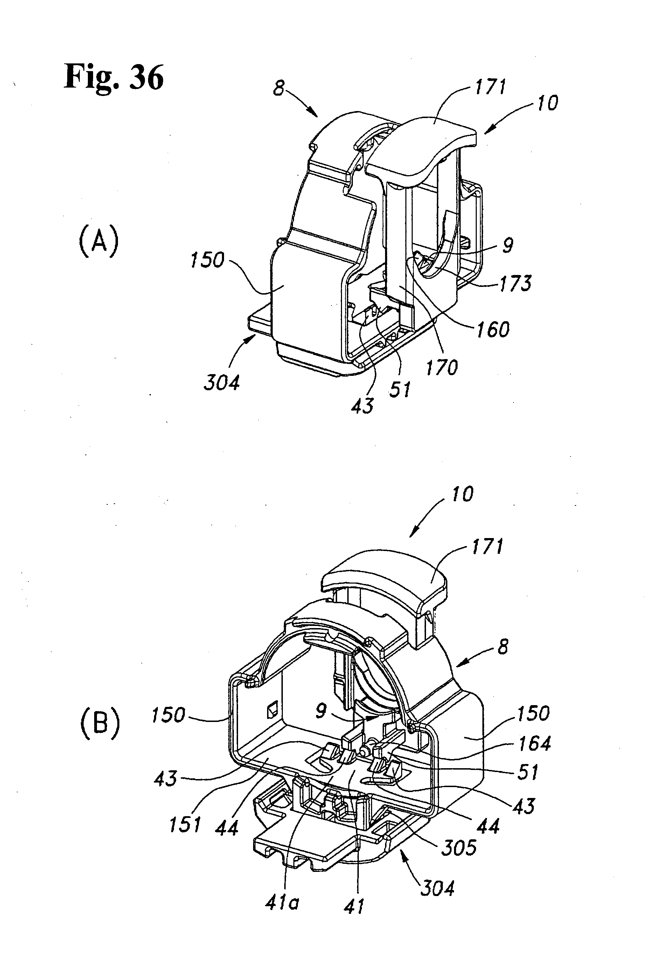

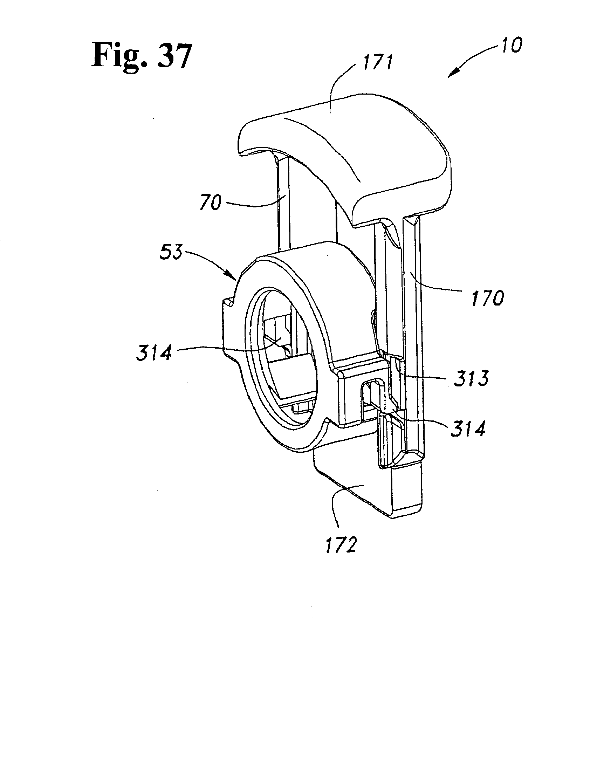

Figs. 34(A), 34(B) are perspective views of the connector comprising the connection confirming mechanism according to a seventh embodiment of the present invention, Fig. 35 is an exploded perspective view of the essential parts of the connector, Figs. 36(A), 36(B) are assembly perspective views of the connecting display component, the slide component, the lock component, and an operation component in the unconnected state, and Fig. 37 is an assembly perspective view of push and lock components in the unconnected state. Here, the same symbols are assigned to the components similar to those of the first to sixth embodiments, and the items which are not specially mentioned are the same as those in the cases of the first to sixth embodiments.

As for the connector 1 according to the seventh embodiment, the outer shell thereof is structured by the main body cover 3 and the end cover 4 which are the same as those of the first embodiment. As shown in Fig. 35, inside the connector 1, in addition to the housing 6 and the valve 7, the connecting display component 8, the slide component 9, and the lock component 10, and the like which are similar to those of the third embodiment, are housed. Inside the end cover 4, a tube lock component 301, which is used for fixing a tube T, and a tube spacer 302 are provided. Also, a pipe spacer 303 defining an insertion opening 20 is attached to an entry side of the housing 6. Furthermore, an operation component 304 is provided on the lower side of the main body cover 3, wherein the user operates (receives an operation force) at the time of the connecting release between the connector 1 and the pipe 2. As shown in Figs. 36(A), 36(B) as well, an attachment hole 305 is provided in the operation component 304, wherein the lower end portion of the connecting display component 8 is inserted. Thereby, the operation component 304 is in the state integrated into the inner connecting display component 8 through the main body cover 3.

The locked portion 41, which is locked in the housing 6, is provided on the bottom wall 151 of the connecting display component 8. The locked portion 41 is formed so as to cut out the center portion of the bottom wall 151, and the width of the connecting portion 41a positioned in the front side is moderately reduced, so that the back end side can easily carry out the elastic deformation in the radial direction (downward) as the fixed end of the connecting portion 41a thereof. In the center of the circumferential direction of the back end side of the locked portion 41, a pair of back locking claws (engaging portions) 43, which is locked in the convex piece (not shown in the figures) of the housing 6 against the urging force of the spring 22, projects toward the inside (upward). Also, inside both back locking claws 43, the pair of engaging pieces (receiving portions) 44, which engages the slide component 9 so as to release the locked state of the back locking claws 43, projects as in a similar fashion. The back locking claws 43 and the engaging pieces 44, which are integrally provided on the locked portion 41, are integrally displaced according to the elastic deformation of the locked portion 41 resulting from an engagement between the back locking claws 43 and the slide component 9.

As shown in Figs. 36(A), 36(B) as well, the slide component 9 includes the pair of projecting pieces (locking release portions) 51 which projects downwardly. Both projecting pieces 51 are disposed so as to respectively enable to engage the engaging pieces 44 of the connecting display component 8. Also, in the center portion of the slide component 9, the abutting plate 160, forming a circular portion in which the collar 11 (see Fig. 1(A)) of the pipe abuts, is provided.

The lock component 10 is in a state urged upward by a spring 311 connected to the lower surface of the upper portion 171 thereof. The lower end side of the spring 311 is housed in a circular concave portion 312 which is provided on the upper surface of the housing 6. As shown in Fig. 37, grooves 313 with a predetermined length are provided in the front face of both side portions 170 of the lock component 10, and the grooves 313 engage control pieces 314 provided in both right and left of the push 53 (i.e., inner side faces of the grooves 313 abut against the control pieces 314), so that the up-and-down movement of the lock component 10 is controlled within a predetermined range.

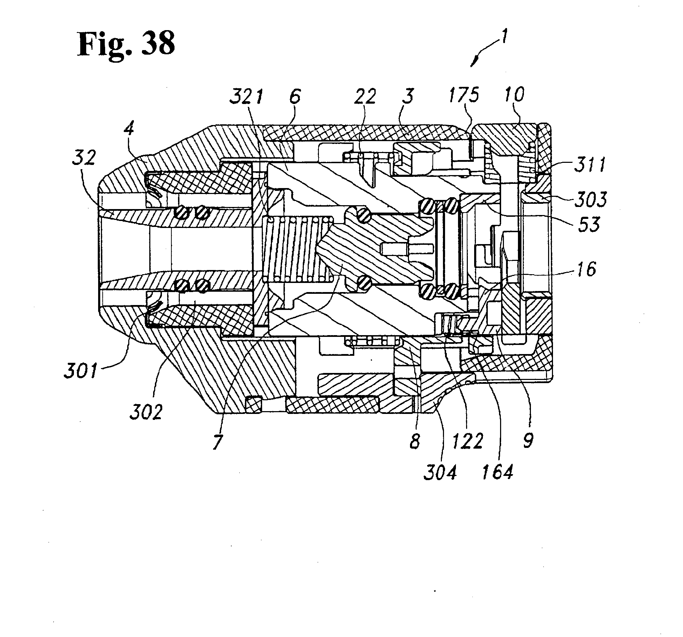

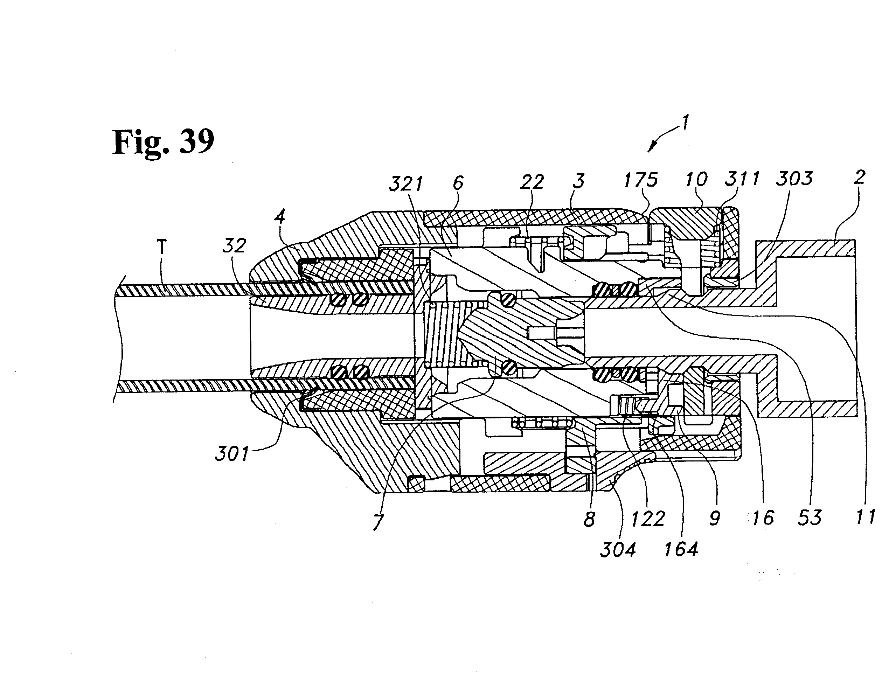

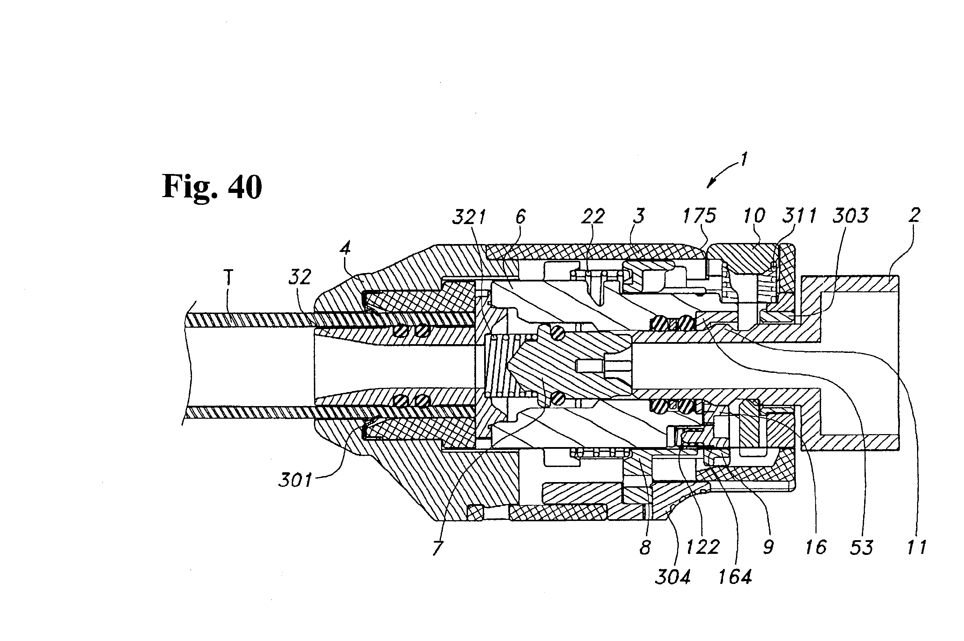

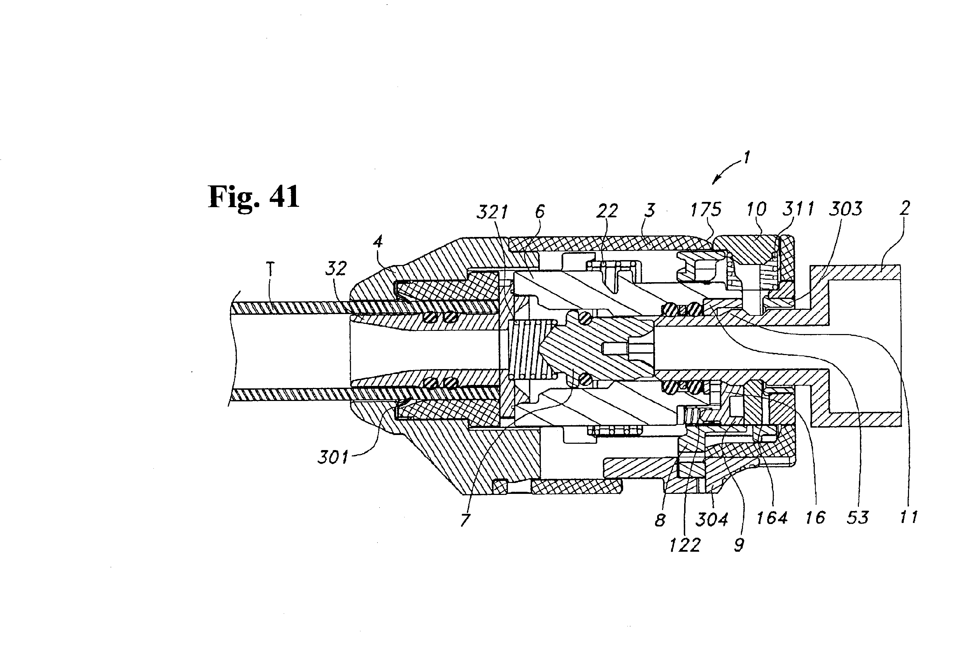

Next, details of the connecting operation between the connector and the pipe of the above-mentioned structure will be explained. Figs. 38 to 41 are cross sectional views showing the series of the operation states of the connector according to the seventh embodiment. Here, Fig. 38 shows the connector in the unconnected state, Fig. 39 shows the connector in the connected state (however, the connecting confirmation nondisplay state) with the pipe, Fig. 40 shows the connector which is on the way of the transition from the state in Fig. 39 to the connecting confirmation display state, and Fig. 41 shows the connector which is in the connecting confirmation display state.

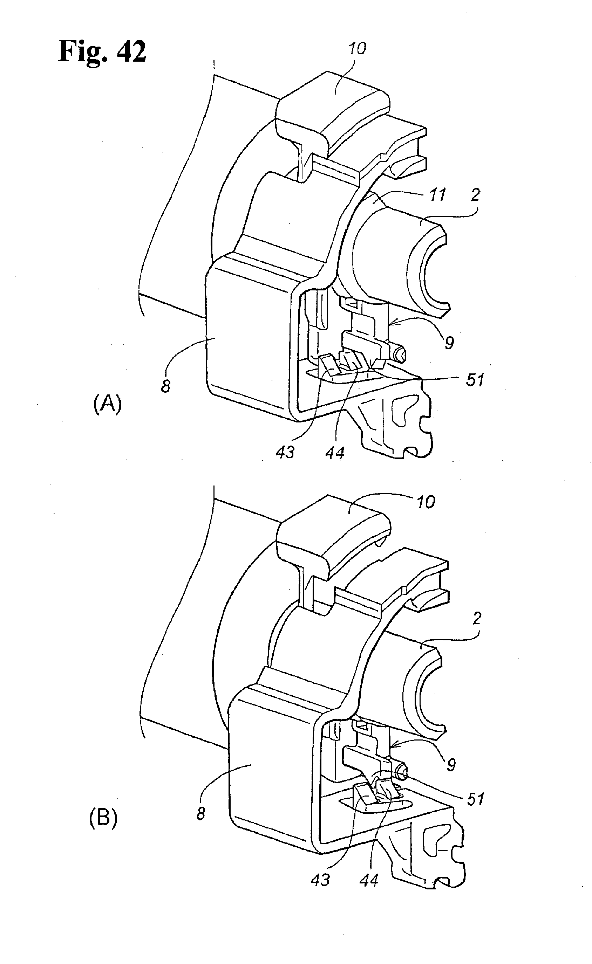

As shown in Fig. 38, in the connector 1 which is in the unconnected state, the connecting display component 8 is retained in the initial position in the state being urged backward by the spring 22 by that the back locking claws 43 thereof (see Figs. 36(A), 36(B)) are locked in the housing. Also, the slide component 9 abuts against the lock component 10 in the state being urged backward by the spring 122. At this time, as shown in Fig. 42(B), the projecting piece 51 of the slide component 9 does not engage the back locking claw 43 of the connecting display component 8, and is positioned right in front of the back locking claw 43. Also, the lock component 10 is installed into the housing 6 through the opening 175 of the main body cover 3, and in the state urged upward by the spring 311, the rise of the lock component 10 is controlled by the push 53. Also, the valve 7 is urged backward by the spring 311, and the flow channel is in a closed state.

Next, as shown in Fig. 39, if the pipe 2 is inserted into the connector 1 in the regular direction, the collar 11 thereof pushes an opening lower end of the lock component 10 down, and abuts against the abutting plate 160 of the slide component 9, and also, the end thereof abuts against the valve 7. The lock component 10 in the unfastened state in Fig. 38 is in a locked position which fixes the pipe 2. However, due to the initiation of the insertion of the pipe 2, the lock component 10 is pushed down to a lock release position once, and then if the pipe 2 is completely inserted, due to an urging force of the spring 311, the lock component 10 returns to the locked position again.

In a state shown in Fig. 39, the connector 1 and the pipe 2 are in an appropriately connected state; however, the connector 1 is in the connecting confirmation nondisplay state, and the user cannot confirm the completion of connection. Consequently, in order to make the connector 1 in the connecting confirmation display state, as shown in Fig. 40, the user is required to push the pipe 2 forward further from the state shown in Fig. 39. Thereby, the collar 11 of the pipe 2 engages the abutting plate 160, and the slide component 9 is pressed forward. From the state shown in Fig. 42(A), while the projecting piece 51 of the slide component 9 pushes the engaging piece 44 of the connecting display component 8 down, the projecting piece 51 goes over the engaging piece 44 and moves forward (see Fig. 42(B)). At this time, the locked portion 41 is elastically deformed downwardly, and an engagement between the back locking claws 43 of the connecting display component 8 and the housing 6 is released. As a result, as shown in Fig. 41, the connecting display component 8 moves backward due to the urging force of the spring 22, is exposed from the display window 15 (see Fig. 34(A)), and becomes the connecting confirmation display state.

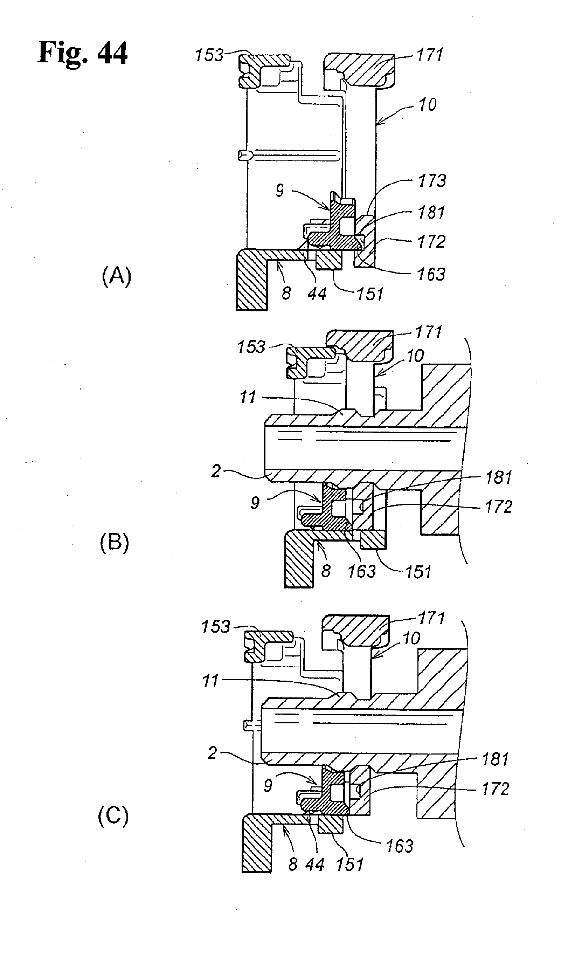

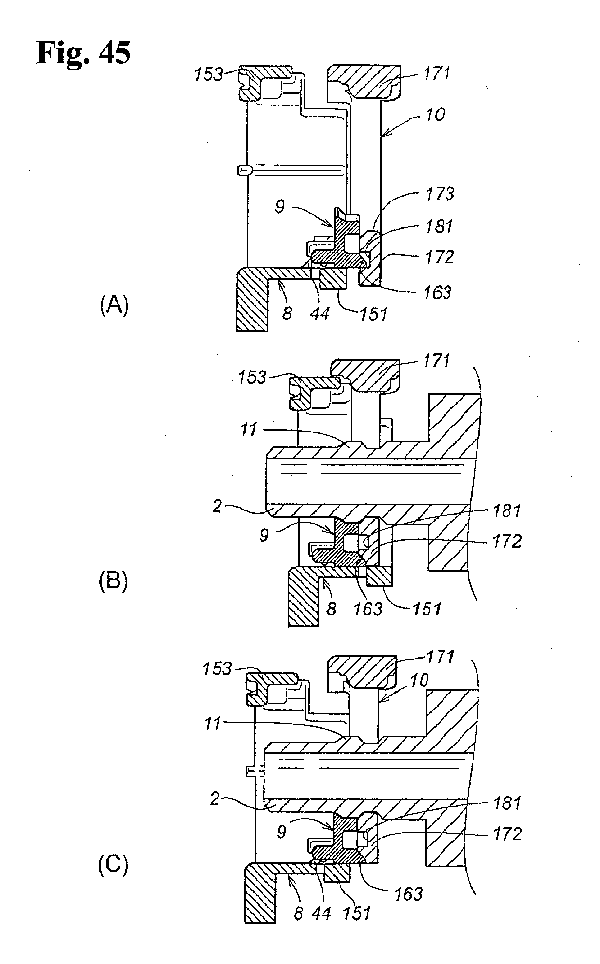

In this connecting confirmation display state, the lock component 10 is in the locked position, and an opening lower margin thereof abuts against the outer circumferential surface of the pipe 2, and the pipe 2 is clamped and fixed between the opening lower margin and the inner surface of the housing 6. At this time, the connecting display component (control component) 8, which has moved from the initial position (movement allowable position) to the connecting display position (movement control position), becomes a state wherein the bottom wall 151 thereof covers the lower portion 172 of the lock component 10. Thereby, a descending operation of the lock component 10 is controlled (i.e., the movement from the locked position is halted), and even in the case that a force of a pull-out direction is abruptly applied to the pipe 2, disengagement thereof can be prevented. Also, as shown in Figs. 44(B), 45(B), as for the lock component 10, the upper portion 171 and the lower portion 172 respectively abut against an upper wall 153 and the bottom wall 151 of the connecting display component 8, so that a downward movement thereof is controlled at two places. Thereby, in a state wherein the pipe 2 is fastened to the connector 1, the lock component 10 becomes a state incapable of being pressed, so that the pipe 2 in a connector-usage state is prevented from being pulled out.

In order to release the connected state shown in Fig. 41, the user is required two processes in that the control of the descending operation of the lock component 10 is released by moving the operation component 304 (i.e., the connecting display component 8) forward by the hand operation, and also in that the fixing of the pipe 2 is released by pushing the lock component 10 down through the opening 175 of the main body cover 3. Thereby, the pipe 2 never comes off without discretion, and the user can pull out the pipe 2 by reliably releasing the lock only when required.

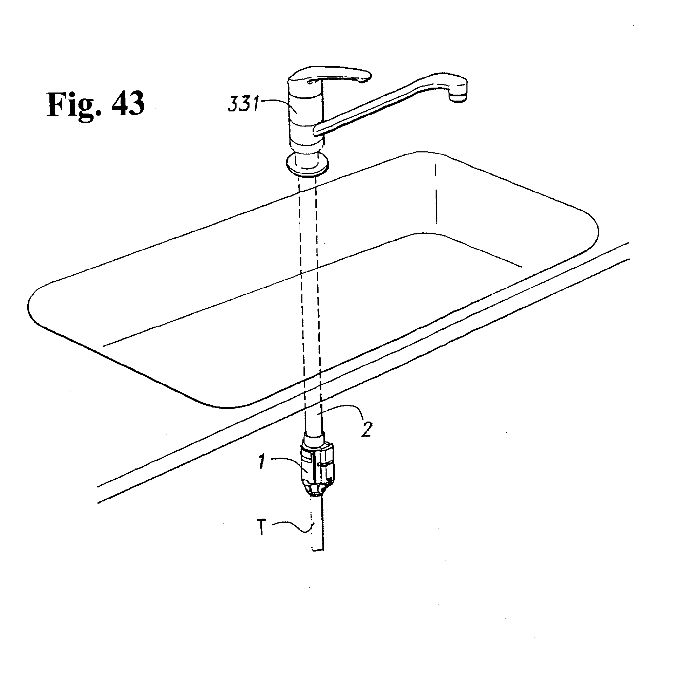

For example, the connector 1 according to the above-mentioned seventh embodiment can be used for a fastening portion of a water distributing pipe for household equipment as shown in Fig. 43. Here, a case of carrying out the fastening between the pipe 2 constituting a water plumbing of a kitchen water faucet 331 and tube T by the connector 1 is shown. Conventionally, when the pipe 2 and the tube T are connected, metallic parts such as a connector portion, stop cock, quick fastener, AHS (registered trademark) joint, and the like, were used. However, there were many parts, the cost was high, and also the operation was cumbersome. With the above-mentioned structure according to the present invention, the connector 1 alone can substitute for those parts, so that effects in that the number of the parts can be substantially reduced (four metallic items can be changed to one resin item) compared to that of a metallic connector used for a conventional water plumbing, and in that workload is small at low cost (can be connected to the water plumbing with one touch of a button), can be expected.

Figs. 44(A), 44(B), 44(C) are cross sectional views showing a first deformation example of the slide component and the lock component according to the seventh embodiment. Figs. 44(A) to 44(C) respectively show the unconnected state, the completion of connection state, and the way of the transition from the completion of connection state to the connecting release state.

As in the case of the third embodiment, at the front face of the lower portion 172 of the lock component 10, the locked hole 181 is provided. In the unconnected state shown in Fig. 44(A), the locking claw 163 of the slide component 9 is inserted into the locked hole 181 of the lock component 10, so that the lock component is retained in the descending position. This descending position is the lock release position in which the height of lower margins of the insertion opening 20 (see Fig. 34(A)) of the connector 1 and the opening 173 of the lock component 10 correspond. As in the case of the seventh embodiment, when the pipe is inserted, there is no need for descending the lock component 10 once.

Next, as shown in Fig. 44(B), when the pipe 2 is inserted, the slide component 9 moves forward, and the locking claw 163 of the slide component 9 is disengaged from the locked hole 181 of the lock component 10. Thereby, the lock component 10 rises up to the locked position, and the pipe 2 is clamped and fixed.

When this connected state is released, as shown in Fig. 44(C), the user moves the operation component 304 (i.e., the connecting display component 8) up to a forward release position. In this release position, the projecting pieces 51 of the slide component 9 overlap with the upside on the front side of the engaging pieces 44 of the connecting display component 8, and it is structured such that if the user stops the operation of the operation component 304, due to the urging force of the spring 122 (see Fig. 38), the release position returns to the state of Fig. 44(B) again. Thereby, as in the case such that the user touches the operation component 304 mistakenly and the like, abruptly releasing the connected state only by moving the operation component 304 to the release position, can be prevented. In this case, in order to completely release the connected state, it is required that the fixing of the pipe 2 is released by pushing down the lock component 10 further in the state wherein the operation component 304 is moved to the release position.

Figs. 45(A), 45(B), 45(C) are cross sectional views showing a second deformation example of the slide component and the lock component according to the seventh embodiment. Figs. 45(A) to 45(C) respectively show the unconnected state, the completion of connection state, and the way of the transition from the completion of connection state to the connecting release state. Here, the items which are not specially mentioned are the same as those in the case of the first embodiment.

A notched portion 341 is provided in a lower end of the front side of the lower portion 172 of the lock component 10. As shown in Fig. 45(B), if the pipe 2 is inserted, the slide component 9 moves forward, so that the locking claw 163 of the slide component 9 is disengaged from the locked hole 181 of the lock component 10. At this time, the locking claw 163 of the slide component 9 is inserted into the notched portion 341 of the risen lock component 10, so that the slide component 9 becomes the state abutting against the lock component 10 (i.e., the slide component 9 is in a position closer to the lock component 10 than that in the case of the first deformation example).

Then, when the connected state is released, if the user moves the operation component 304 up to the release position, as shown in Fig. 45(C), the projecting piece 51 of the slide component 9 goes over the engaging piece 44 of the connecting display component 8, so that a placement relationship between the projecting piece 51 and the engaging piece 44 becomes the same as that in the case of Fig. 45(A). Therefore, in this state, even if the user stops the operation of the operation component 304, the operation component 304 remains retained in the release position. According to such structure, when the connected state is released, the user can release the fixing of the pipe 2 only by pushing the lock component 10 down after operating the operation component 304. Specifically, as in the case of the first deformation example, the user is not required for operating the operation component 304 and the lock component 10 at the same time.

### <Eighth embodiment>

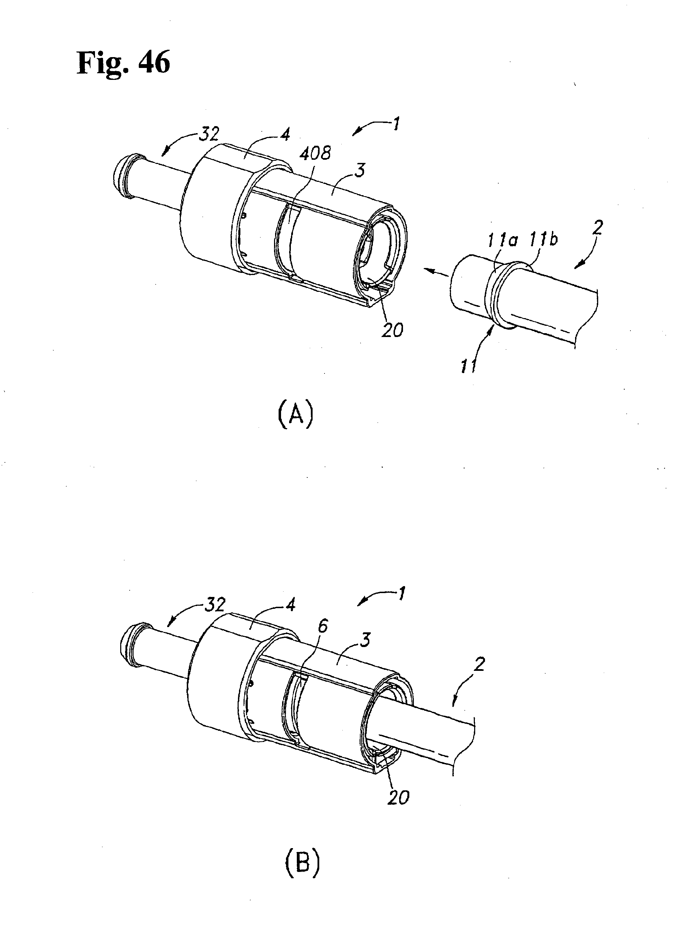

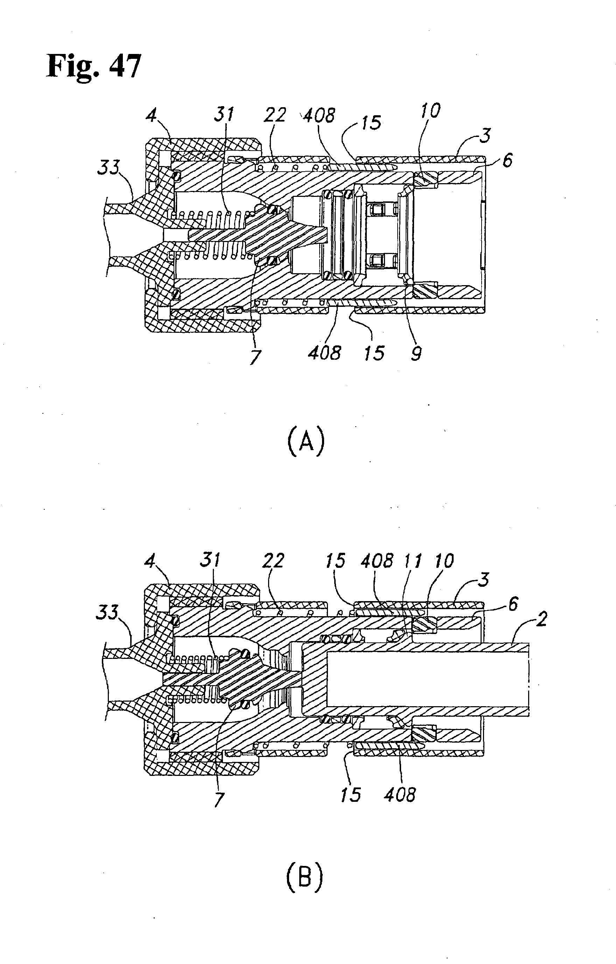

Figs. 46(A), 46(B) are perspective views of the connector comprising the connection confirming mechanism according to an eighth embodiment of the present invention, and Figs. 47(A), 47(B) are horizontal sectional views showing the operation states of the connector according to the eighth embodiment. Figs. 47(A), 47(B) respectively show the unconnected state and the completion of connection state. Here, the same symbols are assigned to the components similar to those of the first embodiment, and the items which are not specially mentioned including the components which are not shown in the figures, are the same as those in the case of the first embodiment.

In the first embodiment, it is configured such that the connecting display component 8 is exposed from the display window 15 so that the user can visually confirm the completion of connection state. However, in the eighth embodiment, instead of the connecting display component 8, a shield component 408 is used. Except that this shield component 408 moves between the initial position which shields the housing 6 and the connecting display position which allows the housing 6 to be exposed, and does not include a connecting display function (for example, it is formed by the same one color as that of the main body cover 3.), the shield component 408 includes the same structure as that of the connecting display component 8 of the first embodiment.

As shown in Figs. 46(A), 47(A), in the unconnected state, the display window 15 is blocked by the shield component 408. On the other hand, as shown in Figs. 46(B), 47(B), in the completion of connection state, due to the movement of the shield component 408, the display window 15 is opened, so that a part of the outer circumferential surface of the inner housing 6 is exposed. In this case, a color with high visibility is provided to the housing 6 in whole, or at least in a portion which is exposed from the display window 15. Incidentally, for the connecting display portion displaying the completion of connection, other components can be used besides the housing 6.

### <Ninth embodiment>

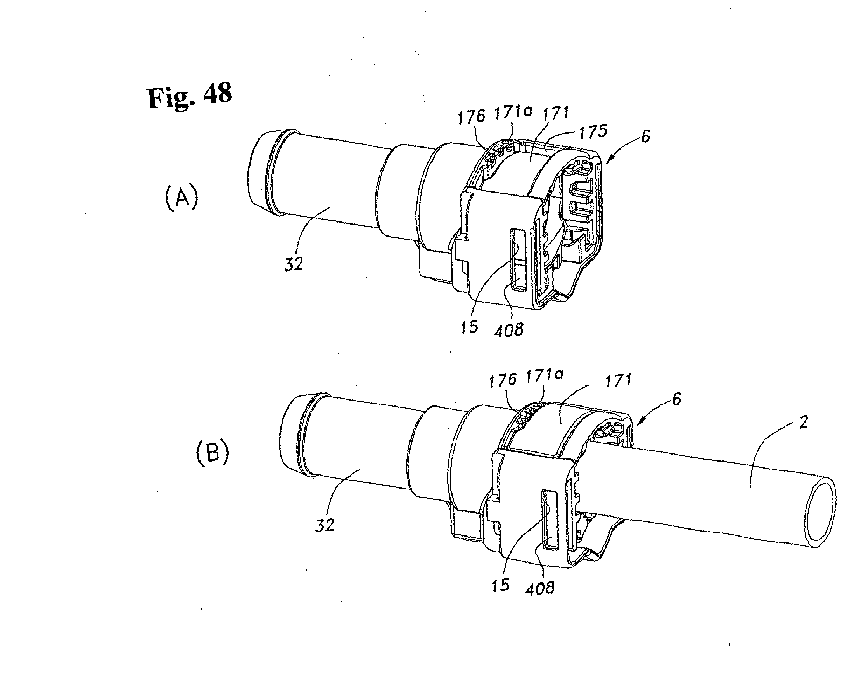

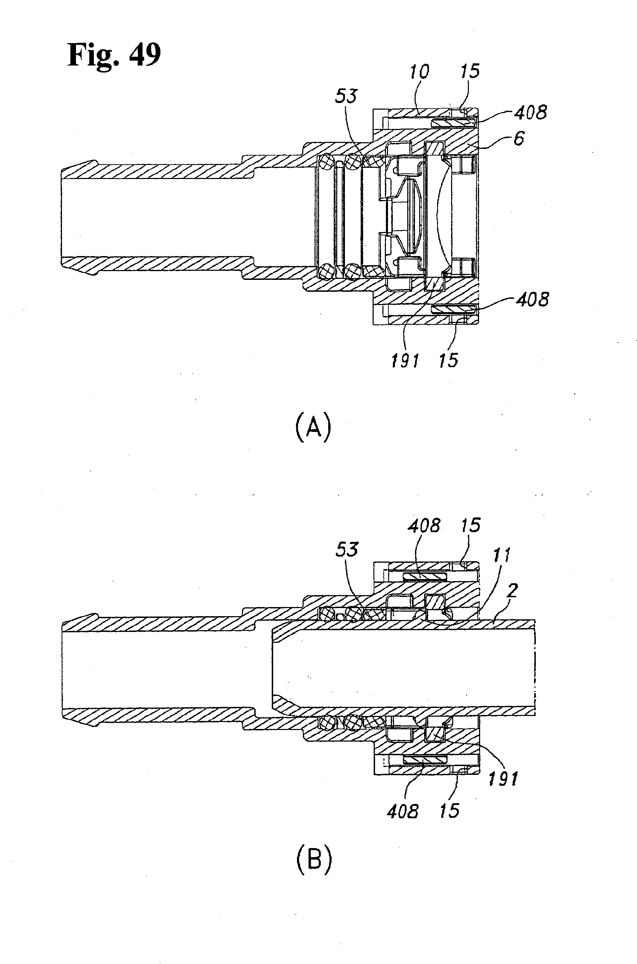

Figs. 48(A), 48(B) are perspective views of the connector comprising the connection confirming mechanism according to a ninth embodiment of the present invention, and Figs. 49(A), 49(B) are horizontal sectional views showing the operation states of the connector according to the ninth embodiment. Figs. 49(A), 49(B) respectively show the unconnected state and the completion of connection state. Here, the same symbols are assigned to the components similar to those of the third embodiment and the eighth embodiment, and the items which are not specially mentioned including the components which are not shown in the figures, are the same as those in the cases of the third embodiment and the eighth embodiment.

As in the case of the eighth embodiment, in the ninth embodiment, the shield component 408 is used instead of the connecting display component 8 of the third embodiment. As shown in Figs. 48(A), 49(A), in the unconnected state, the display window 15 is blocked by the shield component 408. On the other hand, as shown in Figs. 48(B), 49(B), in the completion of connection state, due to the movement of the shield component 408, the display window 15 is opened, so that the part of the outer circumferential surface of the inner housing 6 is exposed.

### <Tenth embodiment>

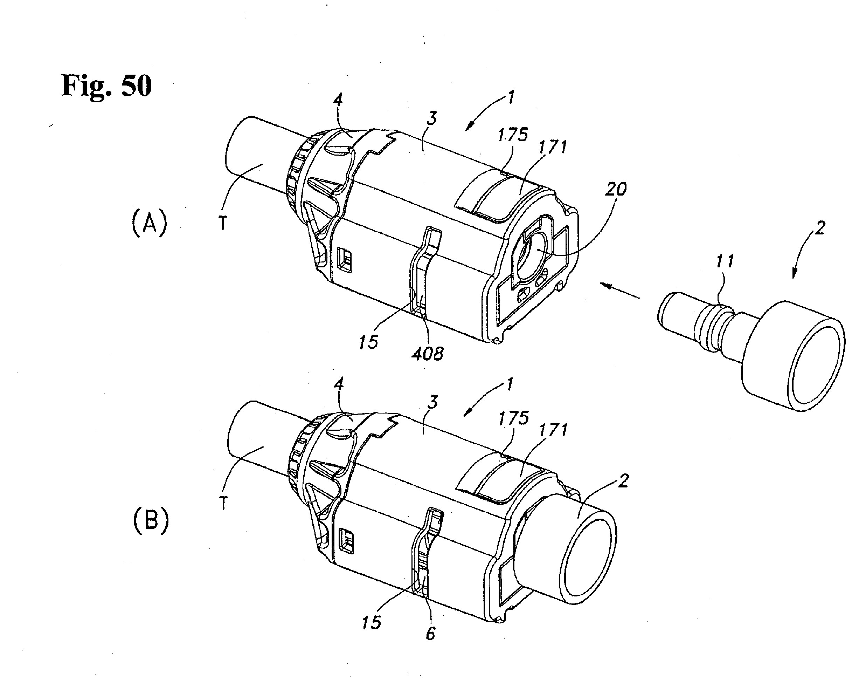

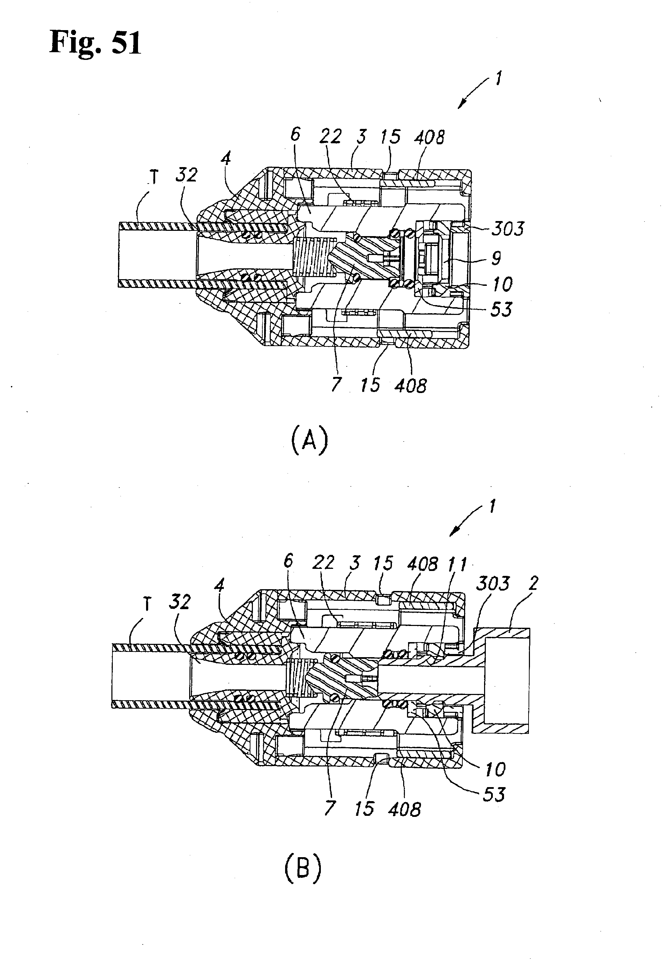

Figs. 50(A), 50(B) are perspective views of the connector comprising the connection confirming mechanism according to a tenth embodiment of the present invention, and Figs. 51(A), 51(B) are horizontal sectional views showing the operation states of the connector according to the tenth embodiment. Figs. 51(A), 51(B) respectively show the unconnected state and the completion of connection state. Here, the same symbols are assigned to the components similar to those of the seventh to ninth embodiments, and the items, which are not specially mentioned including the components which are not shown in the figures, are the same as those in the cases of the seventh to ninth embodiments.

As in the case of the eighth embodiment, in the tenth embodiment, the shield component 408 is used instead of the connecting display component 8 of the seventh embodiment. As shown in Figs. 50(A), 51(A), in the unconnected state, the display window 15 is blocked by the shield component 408. On the other hand, as shown in Figs. 50(B), 51(B), in the completion of connection state, due to the movement of the shield component 408, the display window 15 is opened, so that the part of the outer circumferential surface of the inner housing 6 is exposed.

Although the present invention is explained in detail based on specific embodiments, these embodiments are absolutely exemplified, and the present invention is not limited to these embodiments. For example, materials, shapes, sizes, and the like of the components constituting the connector, can be modified variously depending on the structure or usage of the connected pipe. Also, the connection confirming mechanism according to the present invention can be applied to an automotive water pump plumbing, various types of oil plumbing and residential water plumbing, and water and hot water plumbing. However, the connection confirming mechanism is not limited to the above and can be applied to various types of objects such as disaster-prevention sprinkler plumbing and the like. Also, the structure, in which the component similar to the connecting display component is used as the shield component, is not limited to the case shown in the above-mentioned eighth to tenth embodiments and can be applied to other various types of embodiments as well.

### Brief Description of the Drawings

Figs. 1(A), 1(B) are perspective views of a connector which comprises a connection confirming mechanism according to a first embodiment.
Fig. 2 is an exploded perspective view of essential parts of the connector according to the first embodiment.
Fig. 3 is a cross sectional view showing one operating condition of the connector according to the first embodiment.
Fig. 4 is a cross sectional view showing one operating condition of the connector according to the first embodiment.
Fig. 5 is a cross sectional view showing one operating condition of the connector according to the first embodiment.
Fig. 6 is a cross sectional view showing one operating condition of the connector according to the first embodiment.
Fig. 7 is a cross sectional view showing one operating condition of the connector according to the first embodiment.
Figs. 8(A), 8(B) are fragmentary exploded perspective views of the connector showing a connecting display component which is in a locked state.
Fig. 9 is a fragmentary exploded perspective view of the connector showing a locking release operation of the connecting display component.
Figs. 10(A), 10(B) are pattern diagrams showing a moving operation of the connecting display component in the connector.
Figs. 11(A), 11(B), 11(C) are pattern diagrams showing a connecting release operation by the connecting display component in the connector.
Fig. 12 is an exploded perspective view of the essential parts of the connector comprising the connection confirming mechanism according to a second embodiment.
Fig. 13 is an explanatory drawing of an operation of the connector according to the second embodiment.
Figs. 14(A), 14(B) are perspective views of the connector comprising the connection confirming mechanism according to a third embodiment.
Fig. 15 is an exploded perspective view of the essential parts of the connector according to the third embodiment.
Figs. 16(A), 16(B) are perspective views of a lock component according to the third embodiment.
Figs. 17(A), 17(B) are assembly perspective views of the connecting display component, a slide component, the lock component, and a checker plate according to the third embodiment.
Figs. 18(A), 18(B) are cross sectional views showing one operating condition of the connector according to the third embodiment.
Fig. 19 is a cross sectional view showing one operating condition of the connector according to the third embodiment.
Fig. 20 is a cross sectional view showing one operating condition of the connector according to the third embodiment.
Fig. 21 is a cross sectional view showing one operating condition of the connector according to the third embodiment.
Fig. 22 is a cross sectional view showing one operating condition of the connector according to the third embodiment.
Figs. 23(A), 23(B) are fragmentary exploded perspective views showing one operating condition of the connector according to the third embodiment.
Figs. 24(A), 24(B) are perspective views of the connector comprising the connection confirming mechanism according to a fourth embodiment.
Fig. 25 is an exploded perspective view of the essential parts of the connector according to the fourth embodiment.
Figs. 26(A), 26(B) are perspective views of the connector comprising the connection confirming mechanism according to a fifth embodiment.
Fig. 27 is an exploded perspective view of the essential parts of the connector according to the fifth embodiment.
Fig. 28 is an exploded perspective view of the essential parts of the connector comprising the connection confirming mechanism according to a sixth embodiment.
Figs. 29(A), 29(B) are perspective views of the slide component according to the sixth embodiment.
Fig. 30 is a back view of the connector according to the sixth embodiment.
Fig. 31 is a sectional view taken along line A-A in Fig. 30.
Fig. 32 is a sectional view taken along line B-B in Fig. 30.
Fig. 33 is a sectional view taken along line C-C in Fig. 30.
Figs. 34(A), 34(B) are perspective views of the connector comprising the connection confirming mechanism according to a seventh embodiment.
Fig. 35 is an exploded perspective view of the essential parts of the connector according to the seventh embodiment.
Figs. 36(A), 36(B) are assembly perspective views of the connecting display component, the slide component, the lock component, and an operation component according to the seventh embodiment.
Fig. 37 is an assembly perspective view of push and lock components according to the seventh embodiment.
Fig. 38 is a cross sectional view showing one operating condition of the connector according to the seventh embodiment.
Fig. 39 is a cross sectional view showing one operating condition of the connector according to the seventh embodiment.
Fig. 40 is a cross sectional view showing one operating condition of the connector according to the seventh embodiment.
Fig. 41 is a cross sectional view showing one operating condition of the connector according to the seventh embodiment.
Figs. 42(A), 42(B) are perspective views showing a connected state between the slide component and the connecting display component according to the seventh embodiment.
Fig. 43 is an explanatory drawing showing a usage example of the connector according to the seventh embodiment.
Figs. 44(A), 44(B), 44(C) are cross sectional views showing a first deformation example of the slide component and the lock component according to the seventh embodiment.
Figs. 45(A), 45(B), 45(C) are cross sectional views showing a second deformation example of the slide component and the lock component according to the seventh embodiment.
Figs. 46(A), 46(B) are perspective views of the connector comprising the connection confirming mechanism according to an eighth embodiment. Figs. 47(A), 47(B) are horizontal sectional views showing operation states of the connector according to the eighth embodiment. Figs. 48(A), 48(B) are perspective views of the connector comprising the connection confirming mechanism according to a ninth embodiment. Figs. 49(A), 49(B) are horizontal sectional views showing the operation states of the connector according to the ninth embodiment. Figs. 50(A), 50(B) are perspective views of the connector comprising the connection confirming mechanism according to a tenth embodiment. Figs. 51(A), 51(B) are horizontal sectional views showing the operation states of the connector according to the tenth embodiment.

### Explanation of symbols

- 1: a connector
- 2: a pipe
- 3: a main body cover
- 4: an end cover
- 5: a flow channel
- 6: a housing
- 7: a valve
- 8: a connecting display component
- 9: a slide component
- 10: a lock component
- 11: a collar
- 15: a display window
- 20: an insertion hole
- 22: a spring
- 24: a convex piece
- 32: a joint component
- 40: a half-circular portion
- 41: a locked portion
- 42: a connecting release portion
- 43: a back locking claw
- 44: engaging pieces
- 45: a triangular piece
- 46: an operation claw
- 47: front locking claws
- 54: a spring
- 61: fixing portions
- 101: a lock component
- 102: a pipe fixing portion
- 104: a bar-like piece
- 105: release pieces
- 122: a spring
- 150: side walls
- 151: a bottom wall
- 151a: a wide portion
- 151b: a narrow portion
- 151c: a front end portion
- 160: an abutting plate
- 161: convex portions
- 163: a locking claw
- 164: a locking projection
- 170: both side portions
- 171: an upper portion
- 172: a lower portion
- 172a: inclined surfaces
- 173: an opening
- 173a: a lower margin
- 175: an opening
- 180: a cam surface
- 180a: an inclined portion
- 181: a locked hole
- 191: a checker plate
- 191a: a half-circular portion
- 191b: elastic pieces
- 193: projecting pieces
- 201: exposed pieces
- 304: an operation component
- 313: grooves
- 314: control pieces
- 331: a kitchen water faucet
- 341: a notched portion
- 408: a shield component
- T: a tube

## Claims

1. A connection confirming mechanism which enables to visually confirm a completion of connection between a first component and a second component in which the first component is inserted, said second component, comprising:
a connecting display component moving between an initial position which is not exposed to an outside and a connecting display position in which at least one portion thereof is exposed to the outside;
urging means urging said connecting display component to a connecting display position side; and
a locking mechanism locking said connecting display component in said initial position against an urging force of said urging means,
wherein said locking mechanism releases a locked state at a time of said completion of connection.

2. A connection confirming mechanism which enables to visually confirm completion of connection between a first component and a second component in which the first component is inserted, said second component, comprising:
a shield component moving between an initial position which shields a connecting display portion and a connecting display position which allows the connecting display portion to be exposed;
urging means which urges said shield component to a connecting display position side; and
a locking mechanism locking said shield component in said initial position against an urging force of said urging means,
wherein said locking mechanism releases a locked state at a time of the completion of connection.

3. A connection confirming mechanism according to claim 1 or 2, wherein said locking mechanism comprises an engaging portion provided in said connecting display component or said shield component, and an engaged portion provided in a housing of said second component and engaging said engaging portion.

4. A connection confirming mechanism according to any of claims 1 to 3, wherein said second component further comprises release means which releases a locked state of said connecting display component or said shield component in response to insertion of said first component.

5. A connection confirming mechanism according to claim 4, wherein said release means comprises a component which releases the locked state of said connecting display component or said shield component by deforming or moving due to an engagement with said first component.

6. A connection confirming mechanism according to claim 4 or 5, wherein a slide component moving in response to the insertion of said first component is included, and
wherein said release means comprises a locking release portion which is provided in said slide component, and engages said connecting display component or said shield component due to movement to release said locked state.

7. A connection confirming mechanism according to claim 6, wherein said locking mechanism is integrally provided with an engaging portion, and includes receiving portions which engage the locking release portion of said slide component.

8. A connection confirming mechanism according to claim 4 or 5, wherein said second component further includes a lock component which maintains a connected state with said first component, and
wherein said release means is a release piece provided in said lock component.

9. A connection confirming mechanism according to claim 1 or 2, wherein said lock mechanism is provided to be freely movable in a vertical direction relative to an insertion direction of said first component, includes a lock component which can maintain a connected state with said first component, and lock said connecting display component or said shield component by movement of the lock component, or release thereof.

10. A connection confirming mechanism according to claim 9, wherein said lock mechanism includes a slide component moving in an insertion direction of the first component due to engagement with said first component, and restricts movement of said lock component by the movement of the slide component or release the same.

11. A connection confirming mechanism according to claim 9 or 10, wherein a cam surface is provided in at least one of said lock component or said connecting display component, or at least one of said lock component or said shield component, and engages the other, and
wherein said lock component moves in said vertical direction due to said cam surface.

12. A connection confirming mechanism according to claim 11, wherein said connecting display component or said shield component is locked in said lock component through said cam surface.

13. A connection confirming mechanism according to claim 10, wherein said lock mechanism further comprises a control component controlling the movement of said slide component, and
wherein said control component includes an elastic deformation portion engaging a housing of said second component or said lock component, and releases said slide component by moving on a housing side of said second component due to a deformation of said elastic deformation portion only in the case that said first component is inserted into said second component in a regular direction.

14. A connection confirming mechanism according to claim 10 or 13, wherein said slide component includes an engaging portion which engages a corresponding engaging portion formed in said lock component and controls the movement of the lock component, and releases an engagement between said engaging portion and said corresponding engaging portion by moving in said insertion direction only in the case that said first component is inserted into said second component in the regular direction.

15. A connection confirming mechanism according to any of claims 10, 13, or 14, wherein said urging means is connected to said connecting display component or said shield component and said slide component.

16. A connection confirming mechanism between a first component and a second component wherein the first component is inserted, said second component, comprising:
a lock component which moves between a locked position engaging said first component and maintaining a connected state and a lock release position releasing engagement thereof;
a control component moving between a movement control position halting the movement from said locked position of said lock component and a movement allowable position allowing the movement from said locked position of said lock component;
urging means urging said control component to a movement control position side; and
a locking mechanism locking said control component in said movement allowable position against an urging force of said urging means,
wherein said lock component moves from said lock release position to said locked position when said first component is inserted, and
wherein said locking mechanism releases said locked state at a time of completion of connection between said first component and said second component.

17. A connection confirming mechanism according to claim 16, wherein said control component is a connecting display component provided for display of the completion of connection between said first component and said second component, and exposes at least one portion thereof to an outside in said movement control position while not exposing to the outside in said movement allowable position.

18. A connection confirming mechanism according to claim 16, wherein said control component is a shield component provided for display of the completion of connection between said first component and said second component, and exposes a connecting display portion in said movement control position while shielding the connecting display portion in said movement allowable position.

19. A connection confirming mechanism according to any of claims 16 to 18, wherein said second component allows said control component to move from said movement control position to said movement allowable position when said connecting with said first component is released, and also allows said lock component to move from said locked position to said lock release position.

20. A connection confirming mechanism according to any of claims 16 to 19, wherein said second component further comprises an operation component which receives an operation force for moving said control component against said urging force.

21. A connection confirming mechanism according to any of claims 16 to 20, wherein said lock component exposes at least one portion thereof from an external surface of said second component.
